(19) Europäisches Patentamt
European Patent Office
Office européen des brevets

(11) Numéro de publication : 0 052 542 B2

(12) # NOUVEAU FASCICULE DE BREVET EUROPEEN

(45) Date de publication du nouveau fascicule du brevet : 06.03.91 Bulletin 91/10

(51) Int. Cl.[5] : G01N 27/419

(21) Numéro de dépôt : 81401648.1

(22) Date de dépôt : 20.10.81

(54) **Capteur électrochimique des concentrations d'espèces dans un mélange fluide, et système de régulation de la richesse d'un mélange air-carburant mettant en oeuvre un tel capteur.**

(30) Priorité : 17.11.80 FR 8024380

(43) Date de publication de la demande : 26.05.82 Bulletin 82/21

(45) Mention de la délivrance du brevet : 29.05.85 Bulletin 85/22

(45) Mention de la décision concernant l'opposition : 06.03.91 Bulletin 91/10

(84) Etats contractants désignés : AT CH DE GB IT LI NL SE

(56) Documents cités :
EP-A- 0 011 530
EP-A- 0 012 647
EP-A- 0 035 400
DE-A- 2 718 907
DE-A- 2 848 310
DE-A- 3 020 132
DE-B- 2 460 066
FR-A- 2 051 855
FR-A- 2 223 695
FR-A- 2 440 552
GB-A- 2 056 083

(56) Documents cités :
US-A- 3 768 259
US-A- 3 907 657
US-A- 3 909 384
US-A- 4 158 166

(73) Titulaire : THOMSON-CSF
51, Esplanade du Général de Gaulle
F-92800 Puteaux (FR)

(72) Inventeur : Croset, Michel
THOMSON-CSF SCPI 173, bld Haussmann
F-75360 Paris Cedex 08 (FR)
Inventeur : Nouailles, Noel
THOMSON-CSF SCPI 173, bld Haussmann
F-75360 Paris Cedex 08 (FR)
Inventeur : Perret, Joel
THOMSON-CSF SCPI 173, bld Haussmann
F-75360 Paris Cedex 08 (FR)
Inventeur : Schnell, Jean-Philippe
THOMSON-CSF SCPI 173, bld Haussmann
F-75360 Paris Cedex 08 (FR)
Inventeur : Velasco, Gonzalo
THOMSON-CSF SCPI 173, bld Haussmann
F-75360 Paris Cedex 08 (FR)

(74) Mandataire : Grynwald, Albert et al
THOMSON-CSF SCPI
F-92045 PARIS LA DEFENSE CEDEX 67 (FR)

EP 0 052 542 B2

## Description

L'invention se rapporte aux capteurs électrochimiques des concentrations d'espèces dans un mélange fluide et en particulier, à une système de régulation de la richesse d'un mélange gazeux air-carburant.

Une des familles bien connues de capteurs électrochimiques fonctionne sur le principe de la pile à concentration et mesure la pression partielle, d'une ou plusieurs espèces du mélange gazeux à analyser. Ce mélange gazeux présent dans un premier compartiment, par exemple un mélange oxygènegaz inerte, est séparé d'un milieu de référence par la paroi d'un électrolyte solide dont chaque face porte une électrode. Comme il est bien connu, les équations qui régissent ces capteurs sont :

– aux interfaces, électrodes/électrolyte :

$$O_2 \rightleftharpoons 20 \overset{-4e^-}{\rightleftharpoons} 20^{-2} \qquad (1)$$

la tension $V_{E1/E2}$ qui se développe alors entre les électrodes est donnée par la loi de NERNST :

$$V_{E1/E2} = \frac{RT}{4F} \text{Ln} \frac{P_1}{P_2} \qquad (2)$$

avec

R = constante des gaz parfaits = 8,314 (mole, °K)

F = nombre de Faraday = 96490 C

T = température absolue en degrés Kelvin

$P_1$ et $P_2$ = pressions partielles des milieux 1 et 2 dans les compartiments 1 et 2.

Dans le cas où le mélange est réactif, par exemple un mélange $O_2$ + CO, et si l'électrode est un catalyseur de la réaction de ces gaz, il se produit la réaction :

$$2\,CO + O_2 \rightleftharpoons 2\,CO_2 \qquad (3)$$

et enfin si la combustion est complète jusqu'à réaliser l'équilibre thermodynamique réversible, la relation suivante est vérifiée :

$$\frac{|CO|\ |O_2|^{1/2}}{|CO_2} = K(T) \qquad (4)$$

avec K (T) un coefficient d'équilibre dépendant de la température, et $CO|O_2|^{1/2}$, $CO_2$ les pressions partielles d'oxyde de carbone, d'oxygène et de gaz carbonique.

Les approches récentes de réalisation de capteurs proposent l'utilisation d'un moyen combinant la fonction électrode et la fonction milieu de référence. On utilise pour ce faire une électrode à base d'une combinaison du type : M–MX où M est un métal et X de l'oxygène ou un halogène à détecter (par exemple M–MO dans le cas de la détection de l'oxygène). A titre de perfectionnement selon cette approche, il a été également proposé des capteurs réalisés selon la technique des couches minces utilisée en microélectronique. Ces deux types de réalisation permettent, entre autres, de s'affranchir en partie des effets parasites de la température sur la courbe de réponse des capteurs. En effet de par les équations (2) et (4), la valeur de $V_{E1/E2}$ dépend doublement du paramètre "température". Un choix convenable, d'aprés les tables de chaleur de formation du couple M–MX permet en effet de compenser en partie les deux termes sensibles à la température.

L'invention concerne des capteurs du type comprenant des électrodes-ou d'autres moyens placés en amont de la cellule électrochimique de mesure réalisant la catalyse complète, de telle sorte que le mélange gazeux à analyser atteigne l'équilibre thermodynamique au moins au niveau de l'interface électrode-électrolyte et dont l'une des électrodes est du type décrit ci-dessus à base d'une combinaison M–MX.

De tels capteurs sont utilisés couramment pour la régulation des moteurs à combustion interne et en

particulier pour la régulation de l'admission du mélange air-carburant au niveau du carburateur ou de l'injecteur de carburant. Le capteur est alors placé dans le circuit d'échappement et analyse la concentration relative des espèces oxygène-oxyde de carbone, contenues dans le gaz. Le capteur doit alors être adapté à certaines caractéristiques spécifiques à cette utilisation. En effet le gaz d'échappement va arriver par saccades, au rythme du mouvement alternatif des différents pistons. On résoud ces difficultés en prélevant des échantillons de gaz à analyser, qui seuls sont admis à l'intérieur du capteur où ils seront amenés à l'équilibre thermodynamique. On parle de "prise d'essai" qui, si elles sont suffisamment rapprochées, tendent vers une analyse en continu, bien qu'en réalité le capteur fonctionne en régime dynamique. Pour arriver à ce résultat, on dispose habituellement en amont du capteur des moyens qui freinent sélectivement les gaz qui les traversent et qui limitent l'échange gazeux entre le milieu extérieur et l'intérieur du capteur. Par analogie aux lois qui régissent les circuits électriques, on peut appeler ces moyens : "impédance de transfert". Diverses solutions ont été proposées qui reposent sur deux approches : selon la première approche le mélange gazeux à analyser pénètre dans le capteur par un ou plusieurs orifices calibrés ; selon la seconde approche le mélange gazeux traverse un matériau solide poreux, c'est en général le cas des capteurs de structure plane réalisés par les techniques des couches minces. Le matériau poreux peut également être confondu avec le prolongement de l'électrode de mesure. Dans une variante particulièrement avantageuse de capteur de l'art connu, l'électrode se présente sous la forme d'une couche de matériau catalyseur poreux et le gaz à analyser se propage en son sein selon une direction parallèle aux plus grandes dimensions de l'électrode avant d'atteindre la zone de mesure proprement dite. Un tel capteur est décrit dans les demandes de brevets Européens EP-A-0011038 et EP-A-0.012647.

Les capteurs dont le fonctionnement et les principales caractéristiques viennent d'être rappelés ont des courbes de réponse qui présentent un basculement brusque lorsque la stoéchiométrie du mélange gazeux à analyser est atteinte. En outre, la réponse de ces capteurs ne se réduit pas à une courbe unique mais à un jeu de courbes, paramétrées en température du fait de la dépendance déjà indiquée et, qui se confondent sensiblement dans la région du basculement. On ne peut donc habituellement n'utiliser que cette partie des courbes de réponse et par là ne détecter de façon sûre et répétitive que la stoéchiométrie de la réaction définie par la relation (3).

Ces capteurs peuvent être utilisés tels quels dans certains pays, en particulier dans les pays imposant des normes anti-pollution sévères. Le moteur fonctionne alors avec un mélange air-carburant stoéchiométrique.

Dans d'autres pays, tels que certains pays européens, d'autres contraintes, et notamment des mesures d'économie sur les carburants, imposent un mélange pauvre. Les capteurs de l'art connu, ayant une courbe de réponse "tout ou rien" pour un seul point de régulation, ne sont pas adaptés à ce type de fonctionnement.

Pour résoudre ce problème et plus généralement pour modifier le point de régulation, deux approches ont été proposées.

Selon la première approche, en modifiant certains des éléments constitutifs de ces capteurs, notamment en adoptant une structure particulière d'électrodes de mesure, il est possible de linéariser la courbe de réponse en partie. De tels capteurs sont décrits dans la demande de brevet européen EP-A-0018871 publiée le 12 novembre 1980. Le dispositif décrit est sensible non plus à l'oxygène mais au monoxyde de carbone ; ce qui présente un avantage car le dynamique de variation de la teneur en monoxyde de carbone est habituellement plus importante que celle en oxygène dans les gaz d'échappement. Cependant ce dispositif ne peut être utilisé que dans une gamme restreinte de concentrations relatives au delà de laquelle les effets parasites de la température deviennent trop importants pour assurer une précision de mesure suffisante.

Selon la seconde approche, "l'impédance de transfert" telle que précédemment définie est rendue sélective par l'utilisation d'un matériau poreux spécialement adapté au fluide à analyser.

En effet dans le cas d'un mélange gazeux de deux espèces, par exemple de l'oxygène et de l'oxyde de carbone, l'une des espèces peut diffuser plus rapidement que l'autre au sein du matériau poreux en question. En d'autres termes à une composition de mélange donnée à l'entrée du capteur, peut correspondre une composition de mélange différente au sein du matériau poreux et ensuite au niveau de l'électrode de mesure.

En intégrant dans le capteur une impédance de transfert sélective prédéterminée, associée à des moyens de catalyse destinés à amener le mélange gazeux en équilibre thermodynamique avant analyse, on mesure la concentration apparente des espèces d'un mélange gazeux, c'est à dire celle qui existe au niveau de l'électrode de mesure, et par là on décale le point de régulation de part ou d'autre de la stoechiométrie du mélange gazeux circulant réellement dans les conduits d'échappement.

Un système de régulation utilisant ce type de capteur, décrit dans la demande de brevet européen EP-A-0011530 publiée le 20 mai 1980, est moins dépendant des effets de la température puisque dans ce cas

on détecte également le basculement de la courbe de réponse, basculement qui se produit de part ou d'autre de la stoechiométrie en fonction de la nature l'"impédance de transfert", c'est à dire dans une région de la courbe moins sensible à ce paramètre. Cependant l'amplitude du décalage permis par ces dispositifs est relativement limité et fixé une fois toute à une valeur prédéterminée au moment de la fabrication.

Dans certaines applications, notamment dans les systèmes de régulation de la richesse du mélange air-carburant admis dans les cylindre d'un moteur à combustion interne pilotés par un calculateur numérique ou analogique, il est nécessaire de pouvoir faire évoluer le point de régulation en fonction de paramètres mesurés par différents capteurs tels que la température ou la vitesse du véhicule entrainé par le moteur, ce de façon continue selon des lois préétablies ou élaborées par le calculateur.

Les capteur de l'art connu ne sont pas adaptés à ces types de fonctionnement, l'invention vise à combler ce besoin en se servant d'une structure de capteur intégrant un organe du type pompe ionique permettant de faire évoluer de façon continue la concentration relative apparente mesurée au niveau de l'électrode de mesure, ce a l'aide d'un courant électronique de commande.

Ce type d'organe est utilisé dans l'art connu pour réguler la concentration d'une espèce chimique dans une enceinte ou une conduite, par exemple de l'oxygène, en effectuant un pompage réversible de cette espèce contenue dans une seconde enceinte réservoir.

Une pompe ionique a généralement une structure analogue à celle d'une cellule électrochimique : une membrane constituée par un électrolyte solide perméable aux ions de l'espèce chimique à "pomper" comportant sur ses deux faces des électrodes reliées aux bornes d'une source de courant électronique. En fonction de l'amplitude et de la polarité du courant, il s'établit au sein de l'électrolyte un courant ionique se traduisant par le transport d'ions de l'espèce qui se recombinent sur une des deux électrodes selon le sens de conduction. Dans le cas de l'oxygène, la relation (1) précédement rappelée est satisfaite.

Une exemple de pompe ionique est décrit dans l'article de FOULETIER et autres : "Measurement and regulation of oxygen content in gases using solid electrolyte cells. III. Oxygen pump-gauge", paru dans la revue Britanique : "Journal of Applied Electrochemistry", n° 5, 1975, pages 111-120.

De telles pompes ioniques sont également utilisées dans des dispositifs de mesure de la quantité d'oxygène compris dans un échantillon d'un mélange gazeux admis dans une enceinte de mesure. La méthode mise en oeuvre consiste à séparer l'oxygène des autres espèces chimiques comprises dans le mélange. Pour ce faire, la pompe ionique pompe l'oxygène hors de l'enceinte au travers d'un électrolyte solide conducteur ionique de l'oxygène. La quantité d'oxygène présente dans le mélange gazeux peut être déterminée par le biais de la mesure de la quantité de charges électriques fournies à la pompe ionique pour extraire cet oxygène de l'enceinte.

Les dispositifs de mesure de ce type, décrits, par exemple, dans le brevet US-A-3907657, sont également munis d'une cellule électrochimique de mesure mesurant une faible concentration en oxygène dans l'enceinte de mesure. Cette mesure s'effectue en détectant une forte différence de potentiel aux bornes de la cellule de mesure d'amplitude déterminée.

Une variante de cette méthode est décrite dans la demande de brevet européen EP-A-0035400 publiée le 9 Septembre 1981. On alimente la pompe ionique avec un courant variable, d'amplitude telle que la différence de potentiel qui se développe aux bornes de la cellule de mesure reste constante, ce qui implique que la concentration en oxygène dans l'enceinte de mesure est également constante, des moyens étant prévus pour maintenir aussi constante le température du mélange gazeux. L'amplitude du courant électrique qui doit être fourni à la pompe ionique varie linéairement en fonction de la concentration en oxygène dans le mélange gazeux admis dans l'enceinte. De la connaissance de ce courant peut être déduite la mesure de la concentration en oxygène.

L'invention a donc pour objet un capteur électrochimique tel que spécifié dans les revendications 1 ou 3.

L'invention a encore pour objet un système de régulation de la richesse du mélange air-carburant d'un moteur à combustion mettant en oeuvre un capteur tel que spécifié dans les revendications 1 à 10, ledit système étant défini dans la revendication 11.

L'invention sera mieux comprise et d'autres caractéristiques apparaîtront à la lecture de la description ci-après en se référant aux dessins annexés parmi lesquels :

les figures 1 et 2 illustrent un exemple de capteur électrochimique de l'art connu et son fonctionnement.

la figure 3 illustre schématiquement une pompe ionique.

La figure 4 est un diagramme illustrant le fonctionnement d'un capteur réalisé selon l'invention.

la figure 5 est un premier exemple de réalisation d'un capteur conforme à l'invention selon une première approche.

les figures 6 à 8 illustrent des exemples de réalisation selon une deuxième approche.

la figure 9 illustre un exemple de réalisation selon une troisième approche.

les figures 10 et 11 illustrent un système de régulation dans lequel les capteurs de l'invention sont mis en oeuvre et, sont fonctionnement.

la figure 12 illustre un perfectionnement pouvant être apporté aux capteurs de l'invention.

les figures 13 et 14 illustrent deux exemples de réalisation de capteurs conformes à l'invention selon une quatrième approche.

la figure 15 illustre schématiquement la mise en oeuvre d'un tel capteur dans un système de régulation.

la figure 16 est une variante apportée à la mise en oeuvre d'un capteur réalisé selon la quatrième approche.

La figure 1 décrit un exemple de structure de capteur de l'art connu, incorporant simultanément les fonctions de "prise d'essai", de catalyse et de mesure proprement dite et réalisé selon les techniques de dépôt en couche mince ou en couche épaisse. Dans ce qui suit on supposera que les capteurs électrochimiques décrits sont destinés à la détection des concentrations relatives d'oxygène et de monoxyde de carbone, sans que cela soit limitatif de la portée de l'invention. Les principales caractéristiques d'un tel capteur vont être rappelées dans ce qui suit à titre d'illustration de l'art connu.

Le capteur de la figure 1 comporte deux électrodes déposées sur un électrolyte solide $E_l$, lui-même déposé sur le substrat Sb. Les électrodes $E_1/P_1$ et $E_2$ sont situées dans un même plan. L'électrode $E_1/P_1$ combine les fonctions d'électrode et de milieu de référence. L'électrode $E_1/P_1$ est en outre protégée du milieu extérieur par un isolant étanche et inerte $S_1$, qui la recouvre. On peut utiliser une association du type Ni/Ni O pour réaliser cette électrode-milieu de référence. L'électrode $E_2$ comporte deux zones et communique directement avec le milieu à analyser Mex dans lequel circule le mélange gazeux G par un orifice pratiqué dans le corps isolant $S_1$ qui la recouvre également. Dans la première zone Ct, l'électrode est isolée en sa face inférieure de l'électrolyte $E_l$ par un corps isolant $S_2$ du même type que $S_1$, sur une longueur $1_c$. Le fluide à analyser doit traverser le corps $C_t$ qui est un catalyseur. Dans cette zone les espèces réactives du mélange à analyser (par exemple, dans le cas des gaz d'échappement : CO et $O_2$) sont amenés à l'équilibre thermodynamique complet avant qu'elles n'atteignent la cellule électrochimique proprement dite :

$$[E_2/P_2\text{–}E_l\text{–}E_1/P_1].$$

$P_2$ constitue le milieu réel à analyser. Dans un exemple de réalisation pratique, la zone $C_t$ n'est que le prolongement de l'électrode $E_2/P_2$ et est constituée par le même matériau, par exemple du platine, déposé en couche mince. La catalyse s'effectue par la traversée du catalyseur par le fluide suivant une direction parallèle au plan des électrodes. Les électrodes sont prolongées vers l'extérieur par des liaisons métalliques sur lesquelles peuvent être soudés les contacts $C_1$ et $C_2$, liaisons qui sont réalisées en laque de platine par exemple. Le substrat $S_b$ peut être constitué par un bon isolant à la température de fonctionnement du dispositif (du corindon par exemple) et assure la tenue mécanique de l'ensemble. Ce substrat peut être prolongé selon une direction quelconque pour être adapté à des moyens de fixation à un boitier.

Dans une variante non illustrée, l'électrolyte solide peut être constitué d'une plaque épaisse et le substrat ne pas exister.

Des valeurs typiques sont :

- longeur $l_c$ : 0,1 mm à 0,5 mm
- épaisseur des électrodes : 1000 Å à 100 µm
- épaisseur de l'électrolyte : 1000 Å à 100 µm

Les dépôts peuvent être réalisés par les techniques bien connues, telles que : dépôt sous vide (pulvérisation cathodique, évaporation), dépôt en phase vapeur, dépôt électrochimique ou implantation ionique ou par une combinaison de deux ou plusieurs de ces techniques.

La figure 2 illustre un jeu de courbes de réponse des capteurs de concentration de l'oxygène de l'art connu dans les gaz d'échappement d'un moteur à combustion interne. Chaque courbe représente la différence de potentiel interélectrode $V_{E1/E2}$ en fonction de la concentration de l'oxygène dans les gaz d'échappement, à température constante. Il est à remarquer trois zones : dans les zones I et III, les différentes courbes sont nettement différenciées les unes des autres. En effet, si on se reporte aux relations (2) et (4) rappelées précédemment, on remarque que ces relations contiennent toutes deux le paramètre "température absolue T". Il est dont difficile d'exploiter ces parties de courbes, car les gaz d'échappement n'ont pas une température constante. Par contre dans la zone II de la figure 2, qui correspond au basculement, les différentes courbes sont pratiquement confondues. Aussi seule cette zone est habituellement exploitée. La sortie du capteur est transmise à une organe de commande électrique (non représenté) qui détecte le basculement rapid de la courbe $V_{E1/E2}$ autour du point d'abscisse $\lambda_s$, qui représente le rapport stoechiométrique

du mélange, tel qu'il est mesuré au niveau de l'électrode de mesure $E_2/P_1$. Le point de basculement est fixé, même si l'on peut par le procédé décrit dans la demande de brevet européen EP-A-0011530 précitée décaler légèrement au moment de la fabrication du capteur ce point de basculement de part ou d'autre de la stoechiométrie.

L'invention vise à s'affranchir de cette limitation. Pour ce faire la structure du capteur intègre une cellule supplémentaire analogue à la cellule de mesure $E_1$–$E_l$–$E_2$ fontionnant en pompe ionique, et qui sera appelée dans ce qui suit cellule de pompage ionique.

Une tell pompe ionique est décrite schématiquement par la figure 3. Elle se présente substantiellement sous la forme d'une cellule électrochimique comprenant un électrolyte solide $E_l'$ conducteur ionique d'au moins une espéce chimique déterminée, par exemple de l'oxygène, de forme annulaire dan l'exemple choisi sur les faces interne et externe duquel a été déposée une paire d'électrodes, respectivement $E_1'$ et $E_2'$. Si on applique une différence de potentiel $V_c$ entre les électrodes, selon l'amplitude et la polarité, il se crée un courant ionique au sein de l'électrolyte, c'est à dire d'un transport d'ions de l'espèce considérée de l'électrode $E_2'$ à l'électrode $E_1'$ ou inversement, l'amplitude de ce courant ionique étant reliée par une loi déterminée à l'amplitude de la tension de commande $V_c$. Les électrodes doivent être poreuses ou perméables à l'espèce chimique déterminée. On considèrera dans ce qui suit, l'exemple de l'oxygène, étant entendu que l'oxygène peut être pur ou être compris dans un mélange de divers fluides. Le courant ionique au sein de l'electrolyte se traduit par un courant électronique i dans le circuit électrique extérieur à la cellule. Le courant i peut de déduire de la relation (1) précitée.

Les lois régissant le fonctionnement de telles cellules de pompage ionique sont connues de l'homme de métier. Il peut être utile cependant de rappeler les relations suivantes simplifiées, s'il est supposé que la conductivité électronique propre de l'électrolyte est négligeable.

Tout d'abord la cellule développe une force contre-électromotrice propre $V_{E1/E2}$ donnée par la loi de NERNST et explicitée par le relation (2).

La masse totale en gramme de l'espèce transportée sous forme d'ions est donnée par la relation :

$$m=\frac{i\ t\ M}{96\ 490\ Z} \qquad (4)$$

dans laquelle :

i est le courant électronique
t le temps en seconde
M la mass atomique de l'espèce considérée et Z sa valence
Pour l'oxygène, la relation devient :

$$m_o=\frac{8\ it}{96\ 490} \qquad (4\ bis)$$

Le courant i peut être établi à partie de la relation :

$$i=\frac{V_{E1/E2}+V_c}{Z\ el.} \qquad (5)$$

dans laquelle, outre $V_{E1/E2}$ et $V_C$ déjà définis, $Z_{el}$ est l'impédance de l'électrolyte solide $E_l$ s'opposant à la conduction ionique qui se réduit en première approximation à une résistance $R_{el}$ qui dépend des caractéristiques dimensionnelles de l'électrolyte solide et de sa conductivité ionique à une température donnée.

En combinant (5) et (1) en obtient :

$$i.R_e=V_c+\frac{RT}{4F}\ln\frac{P1}{P2} \qquad (6)$$

Dans l'exemple décrit en relation avec la figure 3, $P_1$ at $P_2$ sont les pressions partielles respectivement des milieux I et II, le milieu II peut être considéré comme un milieu réservoir contenant au moins de l'oxygène et le milieu I le milieu dans lequel circule un mélange gazeux dont la concentration en oxygène doit être régulée. Dans le cadre de l'exemple choisi un mélange gazeux G circule dans une conduite, traverse l'enceinte I constituée par l'intérieur de la pompe ionique et ressort sous forme d'un mélange gazeux G' avec une concentration en oxygène modifiée par la pompe ionique. De façon habituelle on place en sortie un capteur de mesure électrochimique S, mesurant la concentration du mélange en sortie G'. Les signaux électriques sont transmis à un comparateur Co qui reçoit sur une seconde entrée une valeur de consigne Ref de façon à agir sur la tension de commande $V_c$ et par le fait même sur le courant i, en amplitude et en polatiré.

Le flux d'oxygène "pompé" obéit à la loi de FARADAY et est donné par la relation :

$$J = \frac{i}{4F} \qquad (7)$$

dans laquelle J est exprimé en molécules par heure, F et i étant antérieurement définis.

Comme il a été rappelé, l'invention propose un capteur comprenant deux cellules électrochimiques. La première cellule détectant la stoéchiométrie d'un faible volume de mélange gazeux qui lui est transmis après catalyse, ce faible volume de mélange gazeux provenant d'une "prise d'essai". La seconde cellule est une pompe ionique et modifie la composition du mélange gazeux admis à l'intérieur du capteur de manière à ce que le signal de sortie $V_{E1/E2}$ de la cellule de mesure présente un basculement pour une valeur différente de la stoéchiométrie du mélange gazeux telle qu'il se présente réellement à l'entrée du capteur (Mex).

la figure 4, illustre schématiquement le fonctionnement d'un capteur selon l'invention. On retrouve sous la référenc 40, les trois fonctions communes aux capteurs de l'art connu, par exemple le capteur décrit en relation avec la figure 1 : "prise d'essais" 41, "catalyse" 42 et "cellule de mesure" 43, ces fonctions pouvant être tout ou en partie réalisées par un organe commun. La composition du mélange gazeux G' après prise d'essai, dans l'art connu, étant identique ou très proche de la composition du mélange gazeux dans le milieu extérieur Mex où circule le mélange à mesurer. Avant mesure, le mélange gazeux G" vérifie la relation (4). La cellule de pompage ionique 44, à l'aide d'une tension de commande $V_c$, permet de modifier en continu la composition du mélange gazeux admis G' en injectant ou retirant de l'oxygène. Comme il est connu la fonction "prise d'essai" peut être réalisée de différentes manières : à l'aide d'un orifice calibré, d'un corps poreux inerte ou encore, dans le cas des capteurs analogues à celui de la figure 1, à l'aide du corps catalyseur lui-même $C_t$ prolongeant l'électrode de mesure $E_2$. Dans la réalité ces fonctions correspondent à des régions du capteur qui ne peuvent en général, être distinguées de façon aussi nette, un seul organe pouvant assurer à lui seul tout ou partie de ces fonctions. Le pompage ionique peut s'effectuer à tout endroit compris entre la cellule de mesure et la zone de prise d'essai, c'est à dire le plus souvent dans la zone de catalyse.

Cette dernière structure est particulièrement intéressante car, elle permet simultanément une bonne sensibilité de mesure et une faible quantité de gaz admis : de l'ordre du $mm^3/s$ par exemple entre 0,5 et 5 $mm^3/s$ ; ce outre les avantages d'ordre technologiques dus à l'utilisation des techniques de réalisation en couche minces ou épaisses. Il est dont possible de modifier notablement la composition en oxygène du mélange admis G' à l'intérieur du capteur sans nécessiter un courant ionique important au sein de l'électrolyte solide de la cellule de pompage ionique, c'est à dire de la tension de commande $V_c$ ou ce qui revient au même du courant i.

Il est d'ailleurs plus intéressant d'utiliser une source de courant pour produire le courant de commande i. En effet si la cellule est commandée par une tension, le courant qui va la traverser est dépendant de la température comme il ressort clairement de la relation (6). Comme d'autre part la quantité d'ions transportée est directement proportionnelle au courant, il importe donc que ce soit le courant qui soit imposé et non la différence de potentiel si la température est susceptible de varier ou si des mesures de régulation de la température no sont pas mises en oeuvre. Dans ce qui suit on considèrera, sauf mention contraire que la source d'énergie électrique commandant la cellule de pompage ionique est une source de courant.

La figure 5 illustre en coupe une première variante de réalisation de capteurs conformes à l'invention, selon une première approche.

On retrouve les éléments communs à l'art connu, qui a été illustré en relation avec la figure 1 : la cellule de mesure

$$E_1/P_1–E_{l1}–E_2/P_2$$

déposée en couches minces ou épaisses sur un substrat $S_b$, la région de catalyse $C_t$ et la région de prise d'essais $P_{es}$ où se passe les intéractions avec le mélange G circulant dans le milieu à analyser. Ces deux dernières régions étant en fait dans l'exemple décrit constituées par un prolongement de l'électrode de mesure $E_2/P_2$. Le signal de sortie $V_S$ du capteur est transmis à des circuits extérieurs non représentés, par les connexions $C_1$ et $C_2$. Les deux électodes $E_1/P_2$ et $E_2/P_2$ au moins doivent être protégées par une enveloppe isolante étanche et inerte $S_1$, en émail par exemple.

Selon une caractéristique de l'invention, une cellule électrochimique supplémentaire est intégrée dans le capteur et comprend un électrolyte solide $E_{I2}$ inséré entre deux électrodes $E_3$ et $E_4$. Dans l'exemple de réalisation de la figure 5 et selon la première approche, la seconde électrode $E_4$ est confondue avec le prolongement de l'électrode de mesure $E_2$. L'ensemble remplissant un canal percé dans l'enveloppe isolante. La cellule affleure en surface de l'isolant $S_1$ de façon à communiquer avec un milieu contenant de l'oxygène, ce milieu pouvant être le milieu Mex dans lequel circule le mélange gazeux à analyser G. La cellule $E_3$–$E_{I2}$–$E_4$ est alimentée par un courant de commande i par l'intermédiaire des connexions $C_3$ et $C_4$, $C_4$ étant confondu avec $C_2$.

Si on se reporte à nouveau à la description qui précède en relation avec la figure 4, on voit immédiatement que la cellule $E_3$–$E_{I2}$–$E_4$ fonctionnant en pompbnionique modifie en fonction de l'amplitude et de la polarité du courant i, la composition de la prise d'essai admise dans le capteur, c'est à dire la composition du mélange gazeux circulant vers la zone de catalyse $C_t$ pour atteindre ultérieurement la cellule de mesure

$$E_2/P_2–E_{I1}–E_1/P_1.$$

Il s'en suit que cette cellule produit un signal de sortie $V_S$ qui bascule, non plus lorsque la stoechiométrie du mélange G, est atteinte mais bascule en "avance" ou en "retard" par rapport à cette stoéchiométrie, le décalage de part et d'autre de la stoéchiométrie étant déterminée en continu par l'amplitude et la polarité du courant de commande i.

Dans ce qui vient d'être décrit l'électrode $e_4$ était confondue avec le prolongement de l'électrode de mesure. Selon une seconde approche dont trois variantes sont illustrées en relation avec les figureu 6 à 8, l'électrode $E_4$ peut être distincte et le cellule de pompage ionique $E_2$–$E_{I2}$–$E_4$ se présenter comme un élément rapporté sur l'émail protecteur $S_1$.

Selon la première variante, représentée par la figure 6, la zone "prise d'essai" $P_{es}$ se présente sous la forme d'un orifice calibré, analogue à ceux mis en oeuvre dans certains types de capteurs de l'art connu, limitant de façon prédéterminée la quantité de mélange gazeux admis à l'interieur du capteur, d'est à dire dans une enceinte sous-jacente à la cellule de pompage ionique dans laquelle la composition du mélange gazeux est modifiée et devient G', ce du à l'action de cette cellule. Cette enceinte peut être réalisée au moment de la fabrication par masquage et dépôt de la couche d'émail ou par tout autre procédé. Le cellule $E_3$–$E_{I2}$–$E_4$ est ensuite rapportée sur l'ensemble.

Sur la figure 7, la cellule $E_3$–$E_{I2}$–$E_{I4}$ est confondue également avec la zone de prise d'essai $P_{es}$,

Sur la figure 8, la zone de prise d'essai $P_{es}$ est distincte de la cellule $E_3$–$E_{I2}$–$E_4$ et réalisée de façon analogue aux variantes illustrées par la figure 5.

Selon une troisième approche, illustrée par la figure 9, en vue de dessus, la cellule de pompage ionique $E_3$–$E_{I2}$–$E_4$ peut être réalisée de façon analogue à celle de la cellule de mesure et présenter une structure globalement plane au lieu de se présenter sous la forme d'un empilement vertical : "électrode-électrolyte-électrode".

L'électrolyte $E_{I2}$ se prolonge vers l'exterieur en ressortant de la couche d'émail de protection $S_1$. L'électrode $E_3$ définit une zone utile d'échange avec l'oxygène présent dans le milieu extérieur et sert de prise de contact $C_3$.

Une cellule réalisée selon cette structure peut également être adaptée à la seconde approche. On dépose alors une seconde électrode sur l'électrolyte, l'ensemble est déposé ou rapporté sur l'enveloppe isolante, la seconde électrode étant disposée sur le canal de communication avec la zone de catalyse de la cellule de mesure.

Une des applications particulièrement intéressante des capteurs électrochimiques est leur mise en oeuvre dans les système de régulation de la richesse d'un mélange air-carburant admis dans un moteur à combustion intene : Dans l'art connu, ces capteurs sont insérés dans les conduits d'echappement et sont utilisés pour détecter la stoéchiométrie ou une valeur fixe qui en est proche, dans ces conduits, c'est à dire des gaz d'échappement. Des circuits électroniques à seuil détectent le basculement de la courbe à $\lambda_s$ (figure 2) et des circuits de retroaction agissent sur des organes d'admission du mélange ai-carburant pour réaliser ces conditions. L'inconvénient de ces systèmes de régulation est de ne pouvoir définir qu'un seul point de

régulation.

Les capteurs conformes à l'invention permettant de décaler le basculement de la courbe de réponse en "avance" ou en "retard" par rapport à la stoéchiométrie réelle du mélange gazeux circulant dans les conduits d'échappement ; ce de façon continue, sont particulièrement intéressant dans le cadre de cette application.

Les figures 10 et 11 illustrent schématiquement la mise en oeuvre de capteurs de l'invention dans un système de régulation de la richesse d'un mélange air-carburant admis dans les cylindres d'un moteur à combustion. Le moteur 1 comporte une admission d'air A et de carburant E qui sont mélangés dans un organe mélangeur 5. Celui-ci peut être un caburateur à cuve, un dispositif d'injection ou tout autre dispositif analogue. Le mélange est amené au moteur 1 par le conduit A/E. L'organe 5 est sous le contrôle d'un organe régulateur 4. La liaison 12 est par exemple un axe d'accouplement mécanique. Les gaz brûlés sont ensuite éjectés dans l'atmosphère AAb par un tuyau d'échappement $E_c$. Sur le trajet d'éjection des gaz est disposé un capteur 2 conforme à l'invention qui communique avec les gaz d'échappement G. En réalité le capteur, comme illustré sur la figure 10 est contenu dans un boîtier inséré dans le tuyau d'échappement et maintenu par toutes fixations appropriées. Ce boîtier offre une protection contre les agressions directes des gaz d'échappement. Seul un échantillon des gaz d'échappement ou "prise d'essai" est admis à l'intérieur du capteur 2 comme cela a été précédemment rappelé. Le signal électrique de sortie de la cellule de mesure $V_s$ est transmis à une dispositif de commande 3 par les liaisons électriques 10. Le dispositif de commande doit être capable de détecter, par exemple à l'aide d'une logique à seuil, le basculement de la courbe $V_{E1}/E_2$ et sa sortie commande l'organe de régulation 4 par la liaison 11.

L'architecture générale de ce système de régulation est similaire à celles des systèmes de l'Art Connu, notamment à celles décrites en relation avec les figures 14 et 15 du brevet EP-B-0011530.

A la figure 14 de ce brevet est représenté un système comportant un seul capteur détectant une valeur prédéterminée de la composition des gaz d'échappement, valeur fixée au moment de la fabrication.

A la figure 15 de ce brevet est représenté un système comportant deux capteurs ; nombre d'ailleurs qui peut être augmenté. Chaque capteur détecte une valeur distincte de la composition des gaz d'echappement, valeurs également fixée au moment de la fabrication.

Il est nécessaire pour bénéficier des avantages spécifiques des capteurs conformes à l'invention d'adjoindre à cette architecture de base, commune avec l'art connu, des moyens de génération du courant de commande de la pompe ionique intégrée dans la structure du capteur.

Si on désire réaliser une régulation automatique, le système de régulation est complété par un calculateur 6, analogique ou digital, qui reçoit de différents capteurs 7 ou d'organes de commande 7, par les liaisons 14, des informations sur des paramètres caractéristiques du fonctionnement du moteur, de l'environnement ainsi que des instructions diverses. Ces paramètres peuvent être, à titre d'exemple non limitatif la température extérieure, le débit d'air ou le régime du moteur : accéléré, ralenti, etc... Outre d'autres fonctions bien connue de l'homme de métier, telles que l'élaboration des impulsions électriques transmises aux bougies, et qui sortent du cadre de l'invention, le calculateur 6, génère à l'aide d'organes spécialisés le courant i servant à la commande de la cellule de pompage ionique dont est muni le capteur de l'invention 2, courant transmis par les liaisons électriques 13.

L'amplitude et la polarité du courant i servent à dèterminer la quantité d'oxygène pompé, injecté ou extrait, pour modifier la composition de la prise d'essai et par là décaler le basculement de la courbe de réponse du capteur par rapport à la stoechiométrie du mélange gazeux circulant dans les conduits d'échappement $E_c$. Par l'effet de la rétroaction dûe aux organes 3 à 5, le mélange air-carburant admis dans le conduit A/E en est modifié en conséquence.

La figure 11 illustre trois cas de fonctionnement du système de régulation de la figure 10, ce pour une température des gaz d'échappement donnée.

Si i=0, tout se passe comme si la cellule de pompage ionique n'existait pas. La composition du mélange gazeux admis dans le capteur n'est pas modifiée par rapport a celle du milieu à analyser. Ce cas est illustré par le courbe C et c'est le cas des capteurs de l'art connu, le basculement se produit à la stoechiométrie du mélange circulant dans les conduites d'échappement. Ce cas est défini comme correspondant à une richesse R du mélange admis dans la conduite A/E, R=1. Un mélange pauvre est défini comme ayant in excès d'air et un mélange riche comme ayant un excès de carburant.

Les courbes A et B correspondant à deux valeurs du courant de commande i, respectivement $i_1$ et $i_2$ telle que la relation

$$|i_1| = |i_2|$$

soit vérifée. Dans ces deux cas, le basculement de la courbe de réponse $V_s$ du capteur a lieu lorsque la

cellule de mesure dont est muni le capteur détecte la stoechiométrie des mélange gazeux tel que transmis à l'électrode de mesure et dont la teneur en oxygène a été modifée dans un sens ou dans un autre par la cellule de pompage ionique, après admission dans le capteur ("prise d'essai").

Les points de basculement $R_A$ (mélange pauvre) et $R_B$ (mélange riche) correspondent à des décalages de même amplitude mais de sens contraires par rapport à la stoechiométrie. De la connaissance du courant de commande i, il peut être déterminé lorsqu'on détecte le basculement de la courbe la richesse du mélange air-carburant admis dans les cylindres du moteur. Il faut rappeler que ce basculement correspond à la stoechiométrie du mélange admis dans le capteur au niveau de l'électrode de mesure.

En effet, la relation entre le courant de commande i et l'amplitude du décalage du basculement de la courbe par rapport à la stoechiométrie vraie du mélange gazeux à l'entrée du capteur, peut être déterminée par l'expérience ou par le calcul, à l'aide notamment des relations (6) et (7), connaissant la quantité de fluid admis dans le capteur par unité de temps ("prise d'essai"). Dans le cadre des structures de capteurs proches de celles du capteur décrit en relation avec la figure 5, comme il a été rappelé une valeur typique est de l'ordre du $mm^3/s$.

La richesse du mélange air-carburant admis dans les cylindres peut dont être régulée autour d'une valeur de consigne réglable de façon continue en agissant sur l'amplitude et la polarité du courant de commande i qui a son tour détermine la quantité d'oxygène "pompée". Pour ce faire le calculateur 6 incorpore une source de courant réglabe ou programmable en amplitude et polarité (non représentée sur la figure 10). De telles sources réglables sont connues de l'homme de métier et ne nécessitent pas une plus ample description. Il en est de même des conditions exactes d'élaboration du courant i et des courbe de variation de la richesse du mélange admis en résultant. Ces courbes dépendent notamment du type de moteur utilisé.

D'autre part, cette méthode n'est pas limitée à la régulation du mélange air-carburant d'un moteur à combustion interne. Sans rien changer à la structure du schéma de la figure 6, le moteur 1 peut être remplacé, à titre d'exemple non limitatif, par les brûleurs d'une chaudière. Le capteur 2 est alors placé dans le circuit $E_c$, d'évacuation des gaz brûlés. Il peut être appliqué à tout appareil à effet de combustion, la régulation pour sa part peut être effectuée de façon non automatique en modifiant le courant i à l'aide d'un organe de commande manuelle de la source de courant.

Une disposition supplémentaire pouvant être adoptée, pour assurer un meilleur fonctionnement du capteur de l'invention consiste à réguler la température de ce capteur à une valeur prédéterminée.

Cette disposition peut être adoptée plusieurs raisons. En premier lieu, on peut souhaiter commander le cellule de pompage ionique par une source de tension. Or d'après les relations (6) et (7) le courant ionique (et la quantité d'espèce chimique pompée) est dépendant de la température absolue T lorsque le signal de commande est produit par une source de tension. En second lieu, sans que ce soit limitatif, à basse température la conductivité ionique des électrolytes solides est très faible, il est donc intéressant, lorsque le fluide à mesurer est à une température basse, de chauffer le corps du capteur et de le maintenir à une valeur plus élevée.

Divers dispositifs sont connus pour réaliser une telle régulation. La figure 12 illustre un exemple de réalisation d'un tel dispositif. Le capteur 2 de la figure 10 est inséré dans un tube 170, en quartz par exemple. L'ensemble est entouré d'une spire résistive 173 alimentée à l'aide des connexions 174 par un courant électrique. Ce courant peut être fixé une fois pour toute pour assurer une température moyenne à l'intérieur du tube ou au contraire être réglable en fonction de la température du corps du capteur mesurée par un capteur 171, un thermocouple par exemple. Le signal de sortie du thermocouple 171 est transmis via les liasons 172 à un organe d'asservissement non représenté. De façon habituelle ce signal est comparé à une valeur de consigne de manière à ajuster le courant alimentant la spire résistive chauffante 173 à une valeur compensant les dérives en température mesurée.

Le dispositif qui vient d'être décrit s'adapte aux capteurs réalisés selon toutes les variantes précédemment décrites et peut être mis en oeuvre dans le cadre du système de régulation décrit en relation avec les figures 10 et 11.

Dans cette application, lorsque le calculateur 6 est de type numérique, il est alors nécessaire de disposer d'un convertisseur numérique-analogique pour transformer les signaux de type numérique élaborés par le calculateur en un signal analogique de commande à la source de courant i, signal d'amplitude variable.

Selon une quatrième approche, l'invention propose une structure de capteur permettant d'obvier à cet inconvénient.

Un premier exemple de réalisation de capteur selon cette approche est illustré par la figure 13 en vue partielle, dans laquelle des coupes ont été effectuées pour mettre en évidence les parties cachées du capteur. Selon cette approche plusieurs cellules de pompages sont intégrés dans le capteur. Dans l'exemple de la figure 13 ces cellules ont un électrolyte commun $E_{l2}$ et une électrode commune $E_4$ qui est le prolon-

gement de l'électrode de mesure de la cellule de mesure de façon identique aux structures précédemment décrites. La structure du capteur de la figure 13 s'apparente globalement à celle du capteur décrit en relation avec la figure 5 et les éléments constitutifs non nécessaires à la compréhension de la présente approche ne seront plus décrits.

Les cellules de pompage ionique individuelles sont définies par les régions sous-jacentes aux électrodes $E_{31}$ à $E_{34}$, qui affleurent en surface de l'isolant $S_1$ et sur lesquelles des contacts électriques ont été établis avec les liaisons électriques $C_{31}$ à $C_{33}$. Plus généralement les cellules qui sont représentées sur la figure 13 au nombre de quatre peuvent être en nombre quelconque n.

Si chacunes des électrodes peut être parcourue par un courant élémentaire pouvant prendre les valeurs, o, + Δi ou – Δi, le courant équivalent de commande i peut prendre toute valeur discrète comprise entre o et nΔi, en valeur absolue. Il s'en suit un courant ionique total $J_t$ d'après la relation (7) satisfaisant la relation :

$$O \leq | J_t | \leq \frac{N\Delta i}{4F} \qquad (8)$$

L'amplitude du décalage du basculement de la courbe de réponse de la cellule de mesure

$$E_1/P_1–E_{l1}–E_2/P_2$$

de part et d'autre de la stoechiométrie du mélange gazeux à l'entrée du capteur pourra prendre autant de valeurs discrètes que le nombre de cellules de pompage ionique dont est pourvu le capteur.

Toutes les variantes de structure décrites en relation avec les figures 5 à 9 peuvent être mises en oeuvre dans le cadre de cette approche. En particulier la structure décrite en relation avec la figure 9 est particulièrement intéressante dans le cadre de la présente approche. L'adaptation de cette structure est illustrée par la figure 14.

L'électrode $E_4$ reste commune à toutes les cellules, mais l'électrolyte solide est divisée en languettes élémentaires $E_{l21}$ à $E_{l24}$ déposées sur l'électrode $E_4$ qui est le prolongement de l'électrode de mesure $E_2/P_2$ et ressortent latéralement, par exemple en alternance sur les deux bords du substrat $S_b$. Des électrodes $E_{31}$ à $E_{33}$ sont déposées en périphérie et assurent le contact électrique avec les liaisons $C_{31}$ à $C_{34}$.

Comme pour les approches précédentes, la commande des cellules de pompage ionique peut s'effectuer en tension ou en courant. Dans ce dernier cas, il suffit de disposer d'un jeu de n sources élémentaires de courant bipolaires, fonctionnant en tout ou rien sous la commande de signaux délivrés par le calculateur 6.

Lorsque la commande des cellules de pompage ionique s'effectue en tension, il y a lieu généralement de prendre deux types de dispositions.

La première consiste à réguler le température de fonctionnement du capteur. Pour ce faire, le dispositif décrit en relation avec la figure 12 peut être mis en oeuvre.

La seconde consiste à prévoir des électrodes $E_{31}$ à $E_{34}$ de même dimensions surfaciques. En effet si on se reporte à nouveau à la relation (5), il convient de noter que l'impédance $Z_{el}$ qui peut se réduire en première approximation à une résistance $R_{el}$ est donnée par la relation :

$$Z_{el} = R_{el} = \frac{k}{\sigma A} \qquad (9)$$

dans laquelle :

k est une constante de proportionalité

A la surface de la cellule

et σ la conductivité ionique de l'électrolyte, qui dépend de la température.

Si la tension de commande est la même pour toutes les cellules de pompage ionique :

$$"E_{31}–E_{l2}–E_4" \text{ à } "E_{34}–E_{l2}–E_4",$$

il s'en suit que le courant élémentaire parcourant chaque cellule est le même si les surfaces des electrodes $E_{31}$ à $E_{34}$ sont identiques. Il doit être entendu, que l'électrolyte $E_{l2}$ est commun aux cellules ou, dans le cas

contraire, que σ a une même valeur.

La figure 15 illustre schématiquement un circuit de commande en tension des cellules de pompage ionique élémentaires d'un capteur réalisé selon la quatrième approche, ce en relation avec le système de régulation de la figure 10.

Le calculateur 6 comprend un organe de calcul 60 élaborant un mot de commande N par exemple en code binaire pur transmis à un circuit de décodage et d'interface 61 qui fournit sur les sorties $S_1$ à $S_5$ cinq signaux de commande de type binaire actionnant chacun un commutateur, respectivement 62 à 66. Le commutateur 66 est destiné à mettre en service une source de tension de commande positive $+V_c$ : 67 ou négative $-V_c$ : 68, selon le sens du décalage souhaité. Le nombre de commutateurs 62 à 65 fermés détermine l'amplitude du décalage. Ces commutateurs sont reliés chacun à l'une des électrodes $E_{31}$ à $E_{34}$ définissant les cellules élémentaires de pompage ionique. L'électrode commune $E_4$ est reliée à la liaison $C_4$ au point commun aux deux sources 67 et 68. Le nombre de bits du mot de commande N est déterminé par le nombre d'états logiques différents à assurer en sortie du circuit de décodage et d'interface 61, soit $(2n+1)\Delta i$ n est le nombre d'électrodes. Si $\Delta i$ est le courant dans chaque cellule élémentaire résultant de l'application de la tension $\pm V_c$, les états logiques sont : o, $+\Delta i$,... $+n\Delta i$, $-\Delta i$,.... $-n\Delta i$ dans l'exemple choisi $2n+1=9$ et si N est exprimé en binaire pur ; le nombre de bits nécessaire est cinq, ce qui conduit à seize états possible dont certains ne seront pas utilisés.

Au lieu d'imposer une valeur constante dans chaque cellule, on peut directement pondérer ces courants : $\Delta i$, $2\Delta i$, $4\Delta i$, $8\Delta i$ etc... et utiliser directement un mot binaire de commande.

Dans une variante supplémentaire, si on désire ne pas utiliser de sources bipolaires on peut utiliser deux cellules de pompage ionique pour obtenir les courants $+\Delta i$ et $-\Delta i$.

La figure 16 illustre schématiquement cette possibilité. Selon cette variante chaque cellule élémentaire doit avoir une paire d'électrodes distinctes : respectivement

$$E_{31}-E_{34} \text{ et } E_{32}-E_{42}.$$

On mettra en oeuvre pour ce faire les structures décrites en relation avec les figures 6 à 9. Si on relie les électrodes $E_{41}$ et $E_{32}$ à un potentiel $+V_c$ fourni par la source de commande, ce par l'intermédiaire de commutateurs non représentés, et les électrodes $E_{31}$, et $E_{42}$ à un potentiel OV, il s'en suit que les deux cellules élémentaires

$$E_{31}-E_{12}-E_{41} \text{ et } E_{32}-E_{12}-E_{42}$$

peuvent être traversées par des courants $-\Delta i$ et $+\Delta i$ respectivement, occasionnant un décalage du point de basculement de la courbe de réponse de la cellule de mesure

$$E_1/P_1-E_{11}-E_2/P_2$$

non représentée sur la figure 16, de même amplitude mais de sens opposé. Plus généralement le nombre de cellule est égal à 2n.

Naturellement cette variante s'adapte également au cas où les deux cellules de pompage ioniques sont commandées de façon analogique par un courant ou une tension d'amplitude variable, mais de polarité unique.

On retrouve le cas de fonctionnement illustré par la figure 11, pour un courant identique alternativement dans la première et la seconde cellule on obtient un décalage de même amplitude mais de sens opposé (courbes A et B).

Bien que l'invention n'est pas limitée à des réalisations selon cette technique, les capteurs réalisés selon la technique des couches minces ou épaisses peuvent être préférés pour certaines applications, car ils présentent une moins grande inertie de réponse, un encombrement moindre et peuvent être réalisés selon la technologie habituellement mise en oeuvre en micro-électronique. Ils peuvent notamment, selon ce dernier aspect, être associés intimement à d'autres composants électroniques réalisés sur un même substrat ou sur un substrat voisin, à l'abri des hautes températures pour que les circuits électroniques puissent fonctionner correctement. A titre d'exemple les connexions $C_1/C_2$, réalisées également par dépôt, peuvent être reliées à un amplificateur à seuil destiné à détecter le basculement des courbes de la figure 2. Cet aspect est en dehors du cadre de l'invention. D'autres avantages ont été rappelés dans les demandes de brevets européens précitées.

L'invention n'est pas non plus limitée aux réalisations qui viennent d'être décrites et en particulier l'environnement technologique : géométrie extérieure, mode de fixation, contacts électriques, n'a été décrit qu'à

titre purement illustratif. Comme il est bien connu, les différents constituants du capteur pourront être choisis parmi une large gamma de matériaux et par exemple non limitatif :

– l'électrode $E_1/P_1$ peut être constituée par une des associations suivantes : Ni/NiO, Pb/PbO, Ag/AgO, Pd/PdO ou $Cr/Cr_2O_3$ ou plus généralement par un système métal/combinaison de ce métal avec un élément de la colonne VI A du tableau périodique.

– les électrodes $E_2/P_2$, $E_3$ et $E_4$ peuvent être en platine, or ou argent ou en alliage à base de ces métaux.

– les électrolytes $E_{l1}$ et $E_{l2}$ peuvent être en zircone, thorine ou oxyde de cerium stabilisés par un ou plusieurs éléments des colonnes $II_A$ et $III_B$ du tableau périodique, en couche mince ou épaisse ou sous forme massive.

– le catalyseur $C_t$, s'il est distinct de l'électrode de mesure peut être en platine de texture compacte ou poreuse ; ou être constitué par un corps poreux inerte tel que de la zircone ou de l'alumine chargées de catalyseur, métal ou oxyde métallique tel que : ZnO, $CeO_2$, $MnO_2$, $Mn_2O_3$, $CO_2O_3$, NiO, CuO, $Cu_2O_3$, $TiO_2$, $V_2O_5$, $Ag_2O$ ou PbO.

– les moyens de limitation assurant la prise d'essai peuvent être constitués par un corps poreux inerte tel que de la zircone ou l'alumine.

– les matériaux isolants peuvent être constitués, par exemple, par des émaux diélectriques du type habituellement utilisés par les fabricants de circuits hybrides ou par d'autres couches diélectriques et inertes déposées par les techniques des couches minces ou épaisses (dans le sens habituellement retenu en microélectronique).

– le substrat peut être constitué par un bon isolant électrique, inerte vis-à-vis de toutes les réactions électrochimiques intervenant dans le fonctionnement du capteur, avec une bonne tenue mécanique et une bonne adaptation thermique. Le meilleur exemple est l'alumine sous forme de céramique de haute qualité ou de préférence de l'alumine monocristalline, du type Corindon ou saphir. Selon la température de fonctionnement du capteur d'autres matériaux peuvent être retenus comme le quartz, certains oxydes de métaux sous forme de céramique ou monocristalline ou encore certains nitrures comme du nitrure de silicium.

**Revendications**

1. Capteur électrochimique des concentrations d'espèces réactives contenues dans un mélange fluide (G) circulant dans un milieu à analyser (Mex), réalisé selon une technologie de microélectronique du type comprenant une première région comportant des moyens de limitation ($P_{es}$) d'entrée/sortie du flux de fluide à travers lesquels le mélange fluide est admis dans une deuxième région comportant des moyens de catalyse ($r_t$) destinés à amener le fluide admis à l'équilibre thermodynamique, et peut en sortir et une troisième région comportant une cellule électrochimique de mesure ($E_1/P_1$–$E_{l1}$–$E_2/P_2$) de structure plane et comprenant une première électrode à référence interne de pression partielle ($E_1/P_1$) en contact par l'une de ses faces, en tout ou partie, avec un électrolyte solide ($E_{l1}$) conducteur ionique de l'une des espèces réactives ($O_2$) et une seconde électrode ($E_2/P_2$) en matériau catalytique poreux se prolongeant dans la seconde région ($C_t$) pour former les moyens de catalyse, partiellement en contact avec l'une des faces de l'électrolyte solide, cette seconde electrode étant recouverte d'une enveloppe de protection inerte ($S_1$), étanche aux espèces présentes dans le mélange fluide (G), le mélange fluide (G) circulant dans le sens entrant ou sortant par les moyens de limitation (Pes) se propageant au travers des moyens de catalyse ($C_t$) et au travers de la seconde électrode ($E_2/P_2$) jusqu'a l'interface avec l'électrolyte solide ($E_{l1}$), ladite cellule de mesure détectant la stoechiométrie de la réaction des espèces réactives du mélange fluide (G") dans la troisième région et générant, en réponse un signal électrique de tension ($V_S$) présentant un basculement brusque de forte amplitude à la détection de ladite stoechiométrie, un canal de communication, s'étendant de la face extérieure de l'enveloppe jusqu'à la deuxième région, étant aménagé dans l'enveloppe de protection ($S_1$), le capteur étant caractérisé en ce qu'il comprend au moins une cellule électrochimique supplémentaire réalisé selon une technologie de microélectronique, comportant un électrolyte solide ($E_{l2}$) conducteur ionique de l'une des espèces réactives ($O_2$) se présentant sous la forme d'une plaquette recouverte sur ses deux faces principales, respectivement de troisième et quatrième électrodes ($E_3$, $E_4$) conductrices de l'électricité reliées à une source de courant électrique (i) fournissant un courant électrique imposé à température variable de manière à établir une conduction ionique de ladite espèce réactive au sein de l'électrolyte solide d'amplitude et de polarité déterminées et en ce que la troisième électrode ($E_3$) est en contact avec le milieu à analyser (Mex) contenant le mélange fluide fournisseur ou receveur de ladite espèce réactive ($O_2$) objet de la conduction ionique ou de l'un de ses composés, la plaquette étant disposée sur l'enveloppe ($S_1$) pour que la quatrième électrode ($E_4$) soit en contact avec l'embouchure du canal communiquant avec la deuxième région

de manière à modifier les concentrations relatives du fluide admis dans cette région par extraction ou injection de ladite espèce réactive ($O_2$) en quantité proportionnelle à l'amplitude déterminée et à provoquer ledit basculement du signal électrique en tension pour une valeur décalée, en signe et en amplitude, de la stoechiométrie de la réaction desdites espèces réactives contenues dans le mélange fluide (G) tel qu'il se présente à l'entrée du capteur.

2. Capteur selon la revendication 1, caractérisé en ce qu'en outre le canal communique directement avec le mélange fluide (G) par un orifice calibré et en ce que cet orifice constitue les moyens de limitation ($P_{es}$) du flux de fluide admis dans la deuxième région.

3. Capteur électrochimique des concentrations d'espèces réactives contenues dans un mélange fluide (G) circulant dans un milieu à analyser (Mex), du type comprenant une première région comportant des moyens de limitations ($P_{es}$) du flux de fluide à travers lesquels le mélange fluide est admis dans une deuxième région comportant des moyens de catalyse ($C_t$) en matériau poreux destinés à amener le fluide admis à l'équilibre thermodynamique et une troisième région comportant une cellule électrochimique de mesure ($E_1/P_1$-$E_{\ell 1}$–$E_2/P_2$) de structure plane et comprenant une première électrode à référence interne de pression partielle ($E_1P_1$) en contact par l'une de ses faces, en tout ou partie, avec un électrolyte solide ($E_{\ell 1}$) conducteur ionique de l'une desdites espèces réactives ($O_2$) et une seconde électrode ($E_2/P_2$) en matériau catalytique se prolongeant dans la seconde région ($C_t$) pour former les moyens de catalyse, partiellement en contact avec l'une des faces de l'électrolyte solide, cette seconde électrode étant recouverte d'une enveloppe de protection inerte ($S_1$) étanche aux espèces présentes dans le mélange fluide (G), le mélange fluide (G) admis par les moyens de limitation (Pes) se propageant au travers des moyens de catalyse ($C_t$) et au travers de la seconde électrode ($P_2$) jusqu'à l'interface avec l'électrolyte solide ($E_{\ell 1}$) ; ladite cellule de mesure détectant la stoechiométrie de la réaction des espèces réactives du mélange fluide (G") dans la troisième région et générant, en réponse un signal électrique de tension ($V_S$) présentant un basculement brusque de forte amplitude à la détection de ladite stoechiométrie, un canal de communication s'étendant de la face extérieure de l'enveloppe jusqu'à la deuxième région, étant aménagé dans l'enveloppe de protection ($S_1$), le capteur étant caractérisé en ce qu'il comprend au moins une cellule électrochimique supplémentaire comprenant un électrolyte solide ($E_{\ell 2}$) réalisé en matériau conducteur ionique de ladite espèce ($O_2$), remplissant ce canal et déposée sur le prolongement de la seconde électrode ($E_2/P_2$) de la cellule de mesure dans la deuxième région formant les moyens de catalyse ($C_t$) et sur lequel a été déposée une électrode en matériau conducteur ($E_3$) affleurant en surface de l'enveloppe de protection ($S_1$) ; cette électrode constituant avec ledit prolongement les électrodes de la cellule électrochimique supplémentaire destinées à être reliées à une source de courant électrique (i) de manière à établir une conduction ionique de ladite espèce réactive au sein de l'électrolyte solide d'amplitude et de polarité déterminées, l'électrode ($E_3$) affleurant en surface de l'enveloppe ($S_1$) est en contact avec un milieu fournisseur ou receveur de ladite espèce réactive ($O_2$) objet de la conduction ionique ou de l'un de ses composés de manière à modifier les concentrations relatives du fluide admis dans cette deuxième région par extraction ou injection de ladite espèce réactive ($O_2$) en quantité proportionnelle à l'amplitude déterminée et à provoquer ledit basculement du signal électrique en tension pour une valeur décalée, en signe et en amplitude, de la stoechiométrie de la réaction desdites espèces réactives contenues dans le mélange fluide (G) tel qu'il se présente à l'entrée du capteur.

4. Capteur selon la revendication 3, caractérisé en ce que le canal de communication a une forme évasée et en ce que le matériau constituant l'électrolyte solide ($E_{\ell 2}$) et l'électrode ($E_3$) de la cellule électrochimique supplémentaire en contact avec le milieu fournisseur ou receveur de ladite espèce réactive ($O_2$) se présente sous la forme de couches de matériaux sérigraphiées.

5. Capteur selon l'une quelconque des revendications 1 ou 3, caractérisé en ce que les moyens de limitation ($P_{es}$) de flux admis dans la deuxième région sont constitués par un corps poreux inerte.

6. Capteur selon l'une quelconque des revendications 1 ou 3, caractérisé en ce que, les deuxième et troisième régions étant entièrement remplies par le même matériau catalyseur que celui constituant la deuxième électrode ($E_1/P_1$) de la cellule électrochimique de mesure, les moyens de limitation ($P_{es}$) du flux de fluide admis dans la deuxième région sont constitués par ce matériau dont une partie est en contact avec le milieu à analyser.

7. Capteur selon l'une quelconque des revendications 1 ou 3, caractérisé en ce que la cellule électrochimique supplémentaire ($E_3$–$E_{\ell 2}$–$E_4$) est réalisée en matériaux poreux perméables au mélange fluide (G) et constitue les moyens de limitation ($P_{es}$) du flux admis dans la deuxieme region ($C_t$).

8. Capteur selon l'une quelconque des revendications 1 à 7, caractérisé en ce que ladite espèce réactive objet de la conduction ionique est l'oxygène.

9. Capteur selon la revendication 8, caractérisé en ce que les électrolytes solides ($E_{21}$,$E_{22}$) de la cellule électrochimique de mesure et de la cellule électrochimique supplémentaire sont choisis parmi les matériaux suivants : Zircone, thorine, cerine, dopés avec un ou plusieurs éléments des colonnes IIA et IIIB du tableau

périodique.

10. Capteur selon la revendication 8, caractérisé en ce que les électrodes de la cellule électrochimique de mesure et de la cellule électrochimique supplémentaire sont à base de platine, de texture compacte ou poreux ou à base d'un corps poreux inerte chargé de platine ou d'oxydes métalliques, les métaux étant choisis parmi les suivants : titane, vanadium, plomb, argent, nickel, cobalt, chrome, cuivre, manganèse, fer, cerium ou zinc.

11. Système de régulation de la richesse du mélange air-carburant d'un moteur à combustion par analyse électrochimique des gaz d'échappement contenant de l'oxygène, ce système comprenant un capteur (2) selon l'une quelconque des revendications 1 à 10, placé dans une boucle de rétroaction comportant un dispositif de commande (3) recevant et détectant le basculement desdits signaux électriques générés par le capteur pour la commande d'un régulateur (4, 5) de richesse air-carburant, des moyens de commande (6) d'une source d'énergie électrique (i) reliée aux électrodes de la cellule électrochimique supplémentaire contenue dans le capteur (2), établissant la conduction ionique de l'oxygène au sein de l'électrolyte en fonction directe de l'amplitude et de la polarité des signaux électriques délivrés par ladite source et entrainant une variation, dans des proportions préétablies et modifiées à volonté, du rapport des concentrations relatives des espèces réactives présentes dans le gaz d'échappement admis dans la deuxième région ; de façon à ce que la richesse du mélange air-carburant puisse être modifiée dans les mêmes proportions préétablies que la variation du rapport des concentrations relatives des espèces réactives.

12. Système selon la revendication 11, dans lequel les moyens de commande (6) de la source d'énergie électrique comprennent un calculateur numérique ou analogique transmettant des signaux de commande à la source d'énergie électrique d'amplitude et de polarité programmables ; la source d'énergie électrique étant une source de tension ou une source de courant.

13. Système selon la revendication 11, dans lequel le capteur (2) comprend plusieurs cellules électrochimique supplémentaires ($E_{31}$–$E_{\ell 2}$–$E_4$ à $E_{34}$–$E_{\ell 2}$–$E_4$) les électrodes de chacune de ces cellules étant connectées à une source d'énergie électrique de manière à établir dans chacune de ces cellules un courant ionique élémentaire fonction directe de l'amplitude de la source d'énergie électrique qui lui est associée.

14. Système selon la revendication 13, dans lequel les moyens de commande (6) de la source d'énergie électrique comprennent un calculateur numérique (60-61) délivrant des signaux de sortie de type binaire ($S_1$ à $S_6$) commandant en tout ou rien les sources d'énergie (67, 68) associées aux cellules électrochimiques supplémentaires de manière à en activer un nombre prédéterminé et en ce que chaque cellule activée est parcourue par un courant ionique élémentaire de même amplitude, la somme instantannée de ces courants et leur polarité déterminant l'amplitude et le sens de la variation des concentrations relatives des espèces réactives présentes dans le gaz d'échappement admis dans la deuxième région de manière à définir des variations discrètes du point de régulation de la richesse.

15. Système selon la revendication 13, dans lequel le nombre de cellules électrochimiques supplémentaires est un nombre pair de manière à pouvoir définir des premier ($E_{31}$–$E_{\ell 2}$–$E_{41}$) et second ($E_{32}$–$E_2$–$E_{42}$) jeux de cellules et, en ce que les sources d'énergie électrique ($V_c$) associées aux cellules délivrent des signaux d'une seule polarité, les électrodes ($E_{31}$) des cellules du premier jeu en contact avec ledit milieu fournisseur ou receveur de ladite espèce réactive ($O_2$) objet de la conduction ionique étant réunies aux bornes d'une première polarité (–) des sources d'énergie électrique et les électrodes ($E_{32}$) des cellules du deuxième jeu en contact avec ledit milieu fournisseur ou receveur de ladite espèce réactive ($O_2$) objet de la conduction ionique étant connectées aux bornes de la seconde polarité (+), les cellules étant activées en alternance de manière à définir des courants ioniques de sens opposés.

16. Système selon l'une quelconque des revendications 11 à 15, dans lequel le capteur (2) est associé à un dispositif de régulation de la température comprenant une spire résistive chauffante (173) parcourue par un courant asservi à une valeur prédéterminée et un circuit d'asservissement comportant un organe de mesure de la température (171) asservissant le courant sur cette mesure.

## Ansprüche

1. In Mikroelektronik-Technologie hergestellter elektrochemischer Meßwertaufnehmer für die Konzentrationen von reaktiven Stoffen, die in einem fluiden Gemisch (G) enthalten sind, welches in einer zu analysierenden Umgebung (Mex) strömt, vom Typ mit einem ersten Gebiet, welches Eingangs-Ausgangs-Begrenzungsmitttel ($P_{es}$) für die Begrenzung des Fluidstroms enthält, durch welche das fluide Gemisch in einen zweiten Bereich eingelassen wird, der Katalysemittel ($C_t$) enthält, welche dazu bestimmmt sind, das eingelassene Fluid in das thermodynamische Gleichgewicht zu versetzen, und einem dritten Bereich, welcher eine elektrochemische Meßzelle ($E_1/P_1$–$E_{\ell 1}$–$E_2/P_2$) von ebener Struktur enthält,

welche eine erste, interne Partialdruck-Referenzdiode ($E_1/P_1$), die auf einer ihrer Flächen ganz oder teilweise mit einem Feststoffelektrolyt ($E_{\ell 1}$) in Berührung ist, welcher die Ionen eines der reaktiven Stoffe ($O_2$) leitet, und eine zweite Elektrode ($E_2/P_2$) aus einem katalytischen porösen Material enthält, welche in den zweiten Bereich ($C_t$) hinein verlängert ist, um die Katalysemittel zu bilden, und teilweise mit der einen Fläche des Feststoffelektrolyts in Verbindung ist, wobei diese zweite Elektrode von einer inerten Schutzhülle ($S_1$) bedeckt ist, welche für die in dem fluiden Gemisch (G) enthaltenen Stoffe dicht ist ; wobei das Fluidgemisch (G), das durch die Begrenzungsmittel ($P_{es}$) in Eingangs- oder Ausgangsrichtung fließt, sich durch die Katalysemittel ($C_t$) und die zweite Elektrode ($E_2/P_2$) bis zum Übergang zum Feststoffelektrolyten ($E_{\ell 1}$) ausbreitet, wobei die Meßzelle die Stöchiometrie der Reaktion der reaktiven Stoffe des fluiden Gemischs (G") in dem dritten Bereich erfaßt und darauf ansprechend ein elektrisches Spannungssignal ($V_S$) erzeugt, welches ein plötzliches Kippen von großer Amplitude bei der Erfassung der genannten Stöchiometrie aufweist, wobei ein Verbindungskanal, der sich von der Außenfläche der Hülle bis zu dem zweiten Bereich erstreckt, in der Schutzhülle ($S_1$) angebracht ist, und wobei der Meßwertaufnehmer dadurch gekennzeichnet ist, daß er wenigstens eine weitere in Mikroelektronik-Technologie hergestellte elektrochemische Zelle enthält, die einen Feststoffelektrolyt ($E_{\ell 2}$) umfaßt, welcher die Ionen eines der reaktiven Stoffe ($O_2$) leitet und die Form einer Scheibe besitzt, welche auf ihren beiden Hauptflächen von einer dritten bzw. vierten Elektrode ($E_3$, $E_4$) bedeckt ist, die stromleitend sind und mit einer elektrischen Energiequelle (i) verbunden werden, die einen bei veränderlicher Temperatur aufgeprägten elektrischen Strom liefert, so daß eine Ionenleitung für den genannten reaktiven Stoff im Inneren des Feststoffelektrolyts von bestimmter Amplitude und Polarität hergestellt wird, und daß die dritte Elektrode ($E_3$) in Berührung mit dem zu analysierenden Medium (Mex) ist, welches das fluide Gemisch enthält, das den der Ionenleitung unterzogenen reaktiven Stoff ($O_2$) oder eine seiner Komponenten liefert oder aufnimmt, wobei die Scheibe auf der Hülle ($S_1$) angeordnet ist, damit die vierte Elektrode ($E_4$) in Kontakt mit der Ausmündung des Kanals ist, welcher mit dem zweiten Gebiet in Verbindung steht, so daß die relativen Konzentrationen des Fluids geändert werden, welches in dieses Gebiet eingeleitet wird, durch Entzug oder Einspeisung des genannten reaktiven Stoffes ($O_2$) in einer Menge, die proportional zu der bestimmten Amplitude ist, und daß das genannte Kippen des elektrischen Spannungssignals für einen nach Vorzeichen und Amplitude verschobenen Wert der Stöchiometrie der Reaktion der genannten reaktiven Stoffe hervorgerufen wird, welche in dem fluiden Gemisch (G) enthalten sind, wie es sich am Einlaß des Meßwertaufnehmers einstellt.

2. Meßwertaufnehmer nach Anspruch 1, dadurch gekennzeichnet, daß der Kanal ferner direkt mit dem fluiden Gemisch (G) über eine kalibrierte Öffnung in Verbindung ist und daß diese öffnung die Begrenzungsmittel ($P_{es}$) für die Fluidströmung bildet, welche in das zweite Gebiet gelangt.

3. Elektrochemischer Meßwertaufnehmer für die Konzentrationen von reaktiven Stoffen, welche in einem fluiden Gemisch (G) enthalten sind, das in einem zu analysierenden Medium (Mex) strömt, vom Typ mit einem ersten Gebiet, welches Begrenzungsmittel ($P_{es}$) für den Fluidstrom enthält, durch welche das fluide Gemisch in ein zweites Gebiet eingeleitet wird, das Katalysemittel ($C_t$) aus porösem Material enthält, die dazu bestimmt sind, das eingeleitete Fluid in den Zustand thermodynamischen Gleichgewichts zu versetzen, und mit einem dritten Gebiet, welches eine elektrochemische Meßzelle ($E_1/P_1$–$E_{l1}$–$E_2/P_2$) von ebener Struktur enthält, die eine erste, interne Partialdruck-Referenzelektrode ($E_1/P_1$), welche auf einer ihrer Flächen ganz oder teilweise mit einem Feststoffelektrolyt ($E_{l1}$) in Berührung ist, der Ionen eines der reaktiven Stoffe ($O_2$) leitet, sowie eine zweite Elektrode ($E_2/P_2$) aus katalytischem Material aufweist, welche in das zweite Gebiet ($C_t$) hinein verlängert ist, um die Katalysemittel zu bilden, und teilweise mit einer der Flächen des Feststoffelektrolyts in Verbindung ist, wobei diese zweite Elektrode von einer inerten Schutzhülle ($S_1$) bedeckt ist, welche dicht gegenüber den Stoffen ist, die in dem fluiden Gemisch (G) enthalten sind, wobei das fluide Gemisch (G), das durch die Begrenzungsmittel ($P_{es}$) in Eingangs- oder Ausgangsrichtung fließt, sich durch die Katalysemittel ($C_t$) und die zweite Elektrode ($P_2$) bis zum Übergang zum Feststoffelektrolyten ($E_{l1}$) ausbreitet, wobei die genannte Meßzelle die Stöchiometrie der Reaktion der reaktiven Stoffe des fluiden Gemischs (G") in dem dritten Bereich erfaßt und darauf ansprechend ein elektrisches Spannungssignal ($V_S$) erzeugt, welches ein plötzliches Abkippen von großer Amplitude bei der Fest stellung der genannten Stöchiometrie aufweist, wobei ein Verbindungskanal, der sich von der Außenfläche der Hülle bis zu dem zweiten Bereich erstreckt, in der Schutzhülle ($S_1$) angebracht ist, und wobei der Meßwertaufnehmer dadurch gekennzeichnet ist, daß er wenigstens eine zusätzliche elektrochemische Zelle enthält, die einen Feststoffelektrolyt ($E_{l2}$) enthält, welcher aus einem Material gebildet ist, das die Ionen des genannten Stoffes ($O_2$) leitet, diesen Kanal ausfüllt und in der Verlängerung der zweiten Elektrode ($E_2/P_2$) der Meßzelle in dem zweiten Gebiet aufgebracht ist, welches die Katalysemittel ($C_t$) bildet, und worauf eine Elektrode aus leitendem Material ($E_3$) aufgebracht ist, welche in die Oberfläche der Schutzhülle ($S_1$) ausmündet ; wobei diese Elektrode mit der genannten Verlängerung die Elektroden der zusätzlichen elektrochemischen Zelle bildet, welche dazu bestimmt sind, mit einer elektrischen Stromquelle (i) verbunden zu

werden, so daß eine Ionenleitung des genannten reaktiven Stoffes im Inneren des Feststoffelektrolyts von bestimmter Größe und Polarität erhalten wird, wobei die Elektrode ($E_3$), die in die Oberfläche der Hülle ($S_1$) ausmündet, mit einem Medium in Berührung ist, welches den genannten, der Ionenleitung unterzogenen reaktiven Stoff ($O_2$) oder einen seiner Bestandteile liefert oder entgegennimmt, so daß die relativen Konzentrationen des Fluids verändert werden, welches in diesem zweiten Bereich durch Entzug oder Einspeisung des genannten reaktiven Stoffes ($O_2$) in einer Menge, die zu der bestimmten Amplitude proportional ist, eingeleitet wird, und daß das genannte Abkippen des Spannungssignals für einen in Vorzeichen und Amplitude verschobenen Wert der Stöchiometrie der Reaktion der genannten reaktiven Stoffe hervorgerufen wird, welche in dem fluiden Gemisch (G) enthalten sind, wie es sich am Einlaß des Meßwertaufnehmers einstellt.

4. Meßwertaufnehmer nach Anspruch 3, dadurch gekennzeichnet, daß der Verbindungskanal eine sich erweiternde Form besitzt und daß das Material, aus welchem der Feststoffelektrolyt ($E_{I2}$) und die Elektrode ($E_3$) der zusätzlichen elektrochemischen Zelle besteht und das in Berührung mit dem den reaktiven Stoff ($O_2$) liefernden oder entziehenden Medium ist, in Form von durch Siebdruck aufgebrachten Materialschichten vorliegt.

5. Meßwertaufnehmer nach einem der Ansprüche 1 oder 3, dadurch gekennzeichnet, daß die Begrenzungsmittel ($P_{es}$) für die in den zweiten Bereich eingeleitete Strömung durch einen inerten porösen Körper gebildet sind.

6. Meßwertaufnehmer nach einem der Ansprüche 1 oder 3, dadurch gekennzeichnet, daß die Begrenzungsmittel ($P_{es}$) für die in den zweiten Bereich eingeleitete Fluidströmung, wenn der zweite und der dritte Bereich vollständig von demselben Katalysatormaterial ausgefüllt sind wie das Material, woraus die zweite Elektrode ($E_1/P_1$) der elektrochemischen Meßzelle gebildet ist, durch dieses Material gebildet sind, wovon ein Teil in Berührung mit dem zu analysierenden Medium ist.

7. Meßwertaufnehmer nach einem der Ansprüche 1 oder 3, dadurch gekennzeichnet, daß die zusätzliche elektrochemische Zelle ($E_3$–$E_{I2}$–$E_4$) aus porösen, für das fluide Gemisch (G) durchlässigen Materialien gebildet ist und die Begrenzungsmittel ($P_{es}$) für die in den zweiten Bereich ($C_t$) eingeleitete Strömung bildet.

8. Meßwertaufnehmer nach einem der Ansprüche 1 bis 7, dadurch gekennzeichnet, daß der genannte reaktive Stoff, welcher der Ionenleitung unterliegt, Sauerstoff ist.

9. Meßwertaufnehmer nach Anspruch 8, dadurch gekennzeichnet, daß die Feststoffelektrolyte ($E_{I1}$, $E_{I2}$) der elektrochemischen Meßzelle und der zusätzlichen elektrochemischen Zelle unter folgenden Materialien ausgewählt sind : Zinkonerde, Thorerde, Ceroxid, dotiert mit einem oder mehreren Elementen der Spalten IIA und IIIB des periodischen Systems.

10. Meßwertaufnehmer nach Anspruch 8, dadurch gekennzeichnet, daß die Elektroden der elektrochemischen Meßzelle und der zusätzlichen elektrochemischen Zelle auf Platinbasis von kompakter oder poröser Textur ausgebildet sind oder auf der Basis eines porösen inerten Körpers, der mit Platin oder Metalloxiden befrachtet ist, ausgebildet sind, wobei die Metalle unter den folgenden ausgewählt sind : Titan, Vanadium, Blei, Silber, Nickel, Kobalt, Chrom, Kupfer, Mangan, Eisen, Cerium oder Zink.

11. Regelsystem für die Anreicherung des Luft-Kraftstoffgemisches eines Verbrennungsmotors durch elektrochemische Analyse der sauerstoffhaltigen Auspuffgase, wobei dieses System einen Meßwertaufnehmer (2) nach einem der Ansprüche 1 bis 10 enthält, welcher in eine Rückkopplungsschleife eingefügt ist, die eine Steuervorrichtung (3) enthält, welche das Abkippen der genannten elektrischen Signale empfängt und erfaßt, welche von dem Meßwertaufnehmer erzeugt werden, zur Steuerung eines Reglers (4, 5) für die Luft-Kraftstoff-Anreicherung, wobei Steuermittel (6) zur Steuerung einer elektrischen Energiequelle (i), welche mit den Elektroden der zusätzlichen elektrochemischen Zelle in dem Meßwertaufnehmer (2) verbunden ist, die Ionenleitung des Sauerstoffs im Inneren des Elektrolyts in direkter Abhängigkeit von der Amplitude und Polarität der elektrischen Signale bewirken, welche von der Quelle abgegeben werden, und in vorbestimmten und nach Wunsch veränderten Proportionen eine Veränderung des Verhältnisses der Relativkonzentrationen der reaktiven Stoffe verursachen, die in dem Auspuffgas vorhanden sind, welches in den zweiten Bereich eingeleitet wird, so daß die Anreicherung des Luft-Kraftstoff-Gemisches in denselben vorbestimmten Proportionen wie die Änderung des Verhältnisses der relativen Konzentrationen der reaktiven Komponenten verändert werden kann.

12. System nach Anspruch 11, bei welchem die Steuermittel (6) zur Steuerung der elektrischen Energiequelle einen digitalen oder analogen Rechner enthalten, welcher Steuersignale an die elektrische Energiequelle mit programmierbarer Amplitude und Polarität abgibt, wobei die elektrische Energiequelle eine Spannungsquelle oder Stromquelle ist.

13. System nach Anspruch 11, bei welchen der Meßwertaufnehmer (2) mehrere zusätzliche elektrochemische Zellen ($E_{31}$–$E_{I2}$–$E_4$ bis $E_{34}$–$E_{I2}$–$E_4$) enthält, wobei die Elektroden jeder dieser Zellen mit einer elektrischen Energiequelle verbunden sind, so daß in jeder dieser Zellen ein elementarer Ionenstrom eingestellt werden kann, der direkt von der Amplitude der zugeordneten elektrischen Energiequelle abhängt.

14. System nach Anspruch 13, bei welchem die Steuermittel (6) zur Steuerung der elektrischen Energiequelle einen Digitalrechner (60-61) umfassen, welcher Ausgangssignale ($S_1$-$S_5$) von binärer Art abgibt, durch welche die den zusätzlichen elektrochemischen Zellen zugeordneten Energiequellen (67, 68) digital gesteuert werden, so daß von ihnen eine vorbestimmte Anzahl aktiviert wird, und daß jede aktivierte Zelle von einem elementaren Ionenstrom gleicher Amplitude durchflossen wird, wobei die Augenblickssumme dieser Ströme und ihre Polarität die Amplitude und den Sinn der Veränderung der relativen Konzentrationen der reaktiven Stoffe bestimmen, welche in dem Auspuffgas enthalten sind, das in den zweiten Bereich eingelassen wird, so daß diskrete Veränderungen des Anreicherungs-Regelpunktes erhalten werden.

15. System nach Anspruch 13, bei welchen die Anzahl von zusätzlichen elektrochemischen Zellen eine gerade Zahl ist, so daß eine erste Gruppe ($E_{31}$–$E_{l2}$–$E_{41}$) und eine zweite Gruppe ($E_{32}$–$E_{l2}$–$E_{42}$) von Zellen definiert werden können, und daß die den Zellen zugeordneten elektrischen Energiequellen ($V_c$) Signale einer einzigen Polarität abgeben, wobei die Elektroden ($E_{31}$) der Zellen der ersten Gruppe, welche in Berührung mit dem genannten Medium sind, das den genannten reaktiven Stoff ($O_2$) liefert oder aufnimmt, welcher der Ionenleitung unterliegt, mit den Anschlüssen einer ersten Polarität (–) der elektrischen Energiequellen verbunden sind und die Elektroden ($E_{32}$) der Zellen der zweiten Gruppe, welche in Berührung mit dem genannten Medium sind, welches den der Ionenleitung unterworfenen reaktiven Stoff ($O_2$) liefert oder aufnimmt, mit den Anschlüssen der zweiten Polarität (+) verbunden sind, wobei die Zellen abwechselnd derart aktiviert werden, daß Ionenströme von entgegengesetztem Sinn gebildet werden.

16. System nach einem der Ansprüche 11 bis 15, bei welchem der Meßwertaufnehmer (2) einer Vorrichtung zur Temperaturregelung zugeordnet ist, die eine Heizwiderstandswicklung (173) umfaßt, welche von einem Strom durchflossen wird, der auf einen vorbestimmten Wert geregelt ist, und einen Regelkreis enthält, der ein Temperaturmeßorgan (171) aufweist, wodurch der Strom diesem Meßwert nachgeregelt wird.

## Claims

1. An electrochemical probe realized according to a microchip technique for the measurement of reactive species contained within a fluid mixture (G) circulating within a medium (Mex) to be analyzed, of the type comprising a first region comprising means ($P_{es}$) for the inlet/outlet limitation of the fluid flow wherethrough the fluid mixture is admitted into a second region comprising catalysis means ($C_t$) for inducing the admitted fluid into the thermodynamical equilibrium and a third region comprising an electrochemical measurement cell ($E_1/P_1$–$E_{l1}$–$E_2/P_2$) of plane structure and comprising a first internal partial pressure reference electrode ($E_1/P_1$) contacting by one of its faces, totally or partially, a solid electrolyte ($E_{l1}$) adapted to conduct the ions of one of the reactive species ($O_2$) and a second electrode ($E_2/P_2$) of porous catalytic material and extending into the second region ($C_t$) to form a catalysis means, and partially contacting one of the faces of the solid electrolyte, this second electrode being covered by an inert protection envelope ($S_1$) which is tight with respect to the species within the fluid mixture (G), the fluid mixture (G) circulating in the inlet or outlet direction through the limitation means ($P_{es}$) being propagated through catalysis means ($C_t$) and through the second electrode ($E_2/P_2$) until it arrives at the interface with the solid electrolyte ($E_{l1}$), said measurement cell detecting the stoichiometry of the reaction of the reactive species of the fluid mixture (G") within the third region and generating, in response, an electric voltage signal ($V_S$) having a sudden step of high amplitude upon the detection of said stoichiometry, a communication channel extending from the outer face of the envelope to the second region being arranged within the protection envelope ($S_1$), the probe being characterized in that it comprises at least one additional electrochemical cell realized according to the microchip technique and comprising a solid electrolyte ($E_{l2}$) adapted to conduct the ions of one of the reactive species ($O_2$) shaped as a plate covered on both of its main faces by the third and fourth electrodes ($E_3$, $E_4$), respectively, which are electrically conductive and are connected to an electric energy source (i) feeding an imposed electrical current at variable temperature in a manner to establish an ion conduction of said reactive species within the solid electrolyte of predetermined amplitude and polarity, and in that the third electrode ($E_3$) contacts the medium to be analyzed (Mex) containing the fluid mixture supplying or receiving said reactive species ($O_2$) subject to ion conduction or one of its compounds, the plate being disposed on the envelope ($S_1$) so that the fourth electrode ($E_4$) contacts the opening of the channel communicating with the second region in a manner to modify the relative concentrations of the fluid admitted into this region by extraction or injection of said reactive species ($O_2$) in a quantity proportional to the predetermined amplitude, and to cause said step of the electric voltage signal for a value, shifted in sign and amplitude, of the stoichiometry of the reaction of said reactive species contained within the fluid mixture (G)

such as occurring at the input of the probe.

2. Probe according to claim 1, characterized in that the channel communicates further directly with the fluid mixture (G) through a calibrated opening and in that this opening constitutes the limitation means ($P_{es}$) of the fluid flow admitted into the second region.

3. Electrochemical probe for the measurement of concentrations of reactive species contained within a fluid mixture (G) circulating within a medium to be analyzed (Mex), of the type comprising a first region comprising means ($P_{es}$) for the limitation of the fluid flow wherethrough the fluid mixture is admitted into a second region comprising catalysis means ($C_t$) made of porous material and adapted to induce the fluid admitted into the thermodynamical equilibrium, and a third region comprising an electrochemical measurement cell ($E_1/P_1$–$E_{l1}$–$E_2/P_2$) of plane structure and comprising a first internal partial pressure reference electrode ($E_1/P_1$) contacting by one of its faces, totally or partially, a solid electrolyte ($E_{l1}$) adapted to conduct the ions of one of said reactive species ($O_2$) and a second electrode ($E_2/P_2$) of catalytic material and extending into the second region ($C_t$) to form the catalysis means, and partially contacting one of the faces of the solid electrolyte, this second electrode being covered by an inert protection envelope ($S_1$) which is tight with respect to the species occurring within the fluid mixture (G) ; the fluid mixture (G) circulating in the inlet or outlet direction through the limitation means ($P_{es}$) being propagated through catalysis means ($C_t$) and through the second electrode ($P_2$) until it arrives at the interface with the solid electrolyte ($E_{l1}$), said measurement cell detecting the stoichiometry of the reaction of the reactive species of the fluid mixture (G") within the third region and generating, in response, an electric voltage signal ($V_S$) presenting a sudden step of high amplitude upon the detection of said stoichiometry, a communication channel extending from the outer face of the envelope to the second region being arranged with the protection envelope ($S_1$), the probe being characterized in that it comprises at least one additional electrochemical cell comprising a solid electrolyte ($E_{l2}$) formed of a material conducting the ions of said species ($O_2$), filling said channel and deposited on the extension of the second electrode ($E_2/P_2$) of the measurement cell within the second region forming the catalysis means ($C_t$) and whereupon an electrode of conductive material ($E_3$) joining the surface of the protection envelope ($S_1$) is deposited ; this electrode constituting with said extention the electrodes of the additional electrochemical cell adapted to be connected to an electric current source (i) in a manner to establish the ion conduction of said reactive species within the solid electrolyte with predetermined amplitude and polarity, the electrode ($E_3$) joining the surface of the envelope ($S_1$) contacting a medium suppyling or receiving said reactive species ($O_2$) subjected to the ion conduction or one of its compounds, in a manner to modify the relative concentrations of the fluids admitted into this second region by extraction or injection of said reactive species ($O_2$) in a quantity proportional to the predetermined amplitude, and to cause said step of the electric voltage signal for a value, shifted in sign and amplitude, of the stoichiometry of the reaction of said reactive species contained within the fluid mixture (G) such as occurring at the input of the probe.

4. Probe according to claim 3, characterized in that the communication channel has a flared shape and in that the material forming the solid electrolyte ($E_{l2}$) and the electrode ($E_3$) of the additional electrochemical cell contacting said medium supplying or receiving said reactive species ($O_2$) is shaped as material layers deposited by serigraphy.

5. Probe according to any of claims 1 and 3, characterized in that the limitation means ($P_{es}$) of the flow admitted into the second region are formed of an inert porous body.

6. Probe according to any of claims 1 and 3, characterized in that, the second and third regions being entirely filled with the same catalytic material as that constituting the second electrode ($E_1/P_1$) of the electrochemical measurement cell, the limitation means ($P_{es}$) of the fluid flow admitted into the second region are constituted by this material whereof a portion contacts the medium to be analyzed.

7. Probe according to any of claims 1 and 3, characterized in that the additional electrochemical cell ($E_3$–$E_{l2}$–$E_4$) is formed of porous materials which are permeable to the fluid mixture (G) and constitute the limitation means ($P_{es}$) of the flow admitted into the second region ($C_t$).

8. Probe according to any of claims 1 to 7, characterized in that said reactive species subject to the ion conduction is oxygen.

9. Probe according to claim 8, characterized in that the solid electrolytes ($E_{l1}$,$E_l$2) of the electrochemical measurement cell and of the additional electrochemical cell are selected among the following materials : zirconia, thoria, ceria, doped with one or a plurality of elements of columns IIA and IIIB of the periodic table.

10. Probe according to claim 8, characterized in that the electrodes of the electrochemical measurement cell and of the additional electrochemical cell are platinum based, of compact or porous texture, or based on a porous inert body loaded with platinum or metallic oxides, the metals being selected among the following : titanium, vanadium, lead, silver, nickel, colbalt, chromium, copper, manganese, iron, cerium or zinc.

11. Control system for the air-fuel mixture ratio of a combustion engine by electrochemical analysis of the exhaust gas containing oxygen, this system comprising a probe (2) according to any of claims 1 to 10,

placed within a feedback loop comprising a control device (3) receiving and detecting the drop of said electric signals generated by the probe for the control of a regulator (4, 5) of the air-fuel ratio, means (6) for controlling an electric energy source (i) connected to the electrodes of the additional electrochemical cell contained within the probe (2) establishing the ion conduction of the oxygen within the electrolyte in direct function of the amplitude and of the polarity of the electric signals supplied by said source, and causing a variation, within pre-established proportions which may be modified at will, of the ratio of the relative concentrations of the reactive species occurring within the exhaust gas admitted into the second region ; in such a manner that the air-fuel mixture ratio can be modified within the same pre-established proportions as the variation of the ratio of the relative concentrations of the reactive species.

12. System according to claim 11, wherein the control means (6) of the electric energy source comprise a digital or analog computer transmitting control signals of programmed amplitude and polarity to the electric energy source ; the electric energy source being a voltage source or a current source.

13. System according to claim 11, wherein the probe (2) comprises a plurality of additional electrochemical cells ($E_{31}$–$E_{12}$–$E_4$ to $E_{34}$–$E_{12}$–$E_4$), the electrodes of each of these cells being connected to an electric energy source in a manner to establish within each of these cells an elementary ion current being a direct function of the amplitude of the electric energy source associated therewith.

14. System according to claim 13, wherein the control means (6) of the electric energy source comprise a digital computer (60-61) supplying output signals ($S_1$ to $S_5$) of binary type and digitally controling the energy source (67, 68) associated with the additional electrochemical cells in a manner to activate a predetermined number thereof, and in that each activated cell is crossed by an elementary ion current of the same amplitude, the momentary sum of these currents and their polarities determining the amplitude and the sense of the variation of the relative concentrations of the reactive species occurring within the exhaust gas admitted into the second region, in a manner to define discrete variations of the mixture ratio set point.

15. System according to claim 13, wherein the number of additional electrochemical cells is a pair number, so that first ($E_{31}$–$E_{12}$–$E_{41}$) and second ($E_{32}$–$E_2$–$E_{42}$) sets of cells can be defined, in that the electric energy sources ($V_c$) associated with the cells supplying signals of a single polarity, the electrodes ($E_{31}$) of the cells of the first set contacting said medium supplying or receiving said reactive species ($O_2$) subject to the ion conduction being connected to the terminals of a first polarity (–) of the electric energy sources and the electrodes ($E_{32}$) of the cells of the second set contacting said medium supplying or receiving said reactive species ($O_2$) subject to the ion conduction being connected to the terminals of the second polarity (+) the cells being alternatingly activated in a manner to define ion currents of opposite signs.

16. System according to any of claims 11 to 15, wherein the probs (2) is associated with a temperature control device comprising a resistive heating winding (173) crossed by a current controlled to a predetermined value and a control circuit comprising a temperature measurement member (171) slaving the current to this measurement.

FIG.1

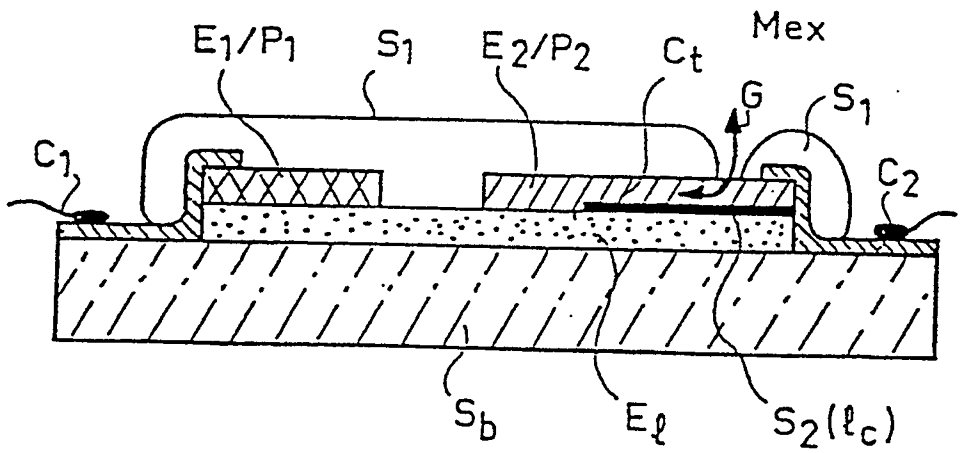
E1/P1
S1
E2/P2
Ct
Mex
G
S1
C1
C2
Sb
Eℓ
S2(ℓc)

FIG.2

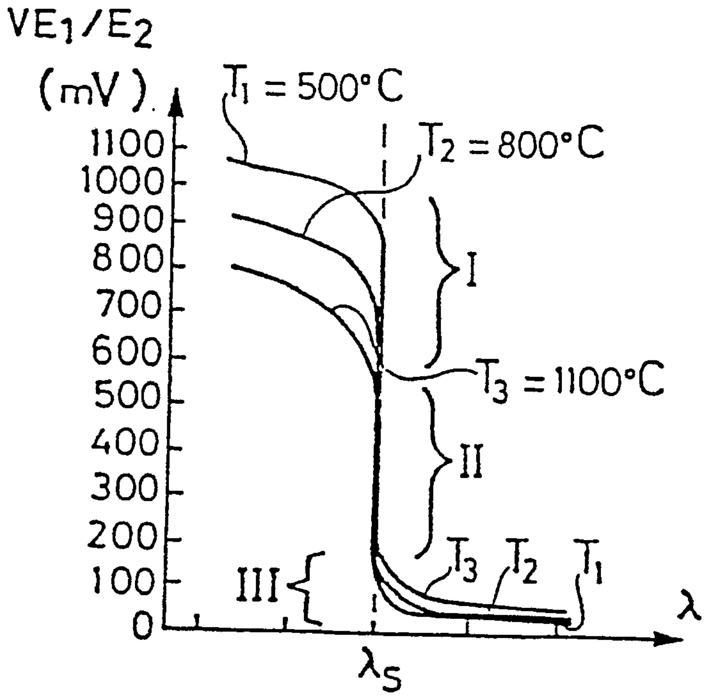
VE1/E2
(mV)
T1 = 500°C
T2 = 800°C
T3 = 1100°C
1100
1000
900
800
700
600
500
400
300
200
100
0
I
II
III
T3
T2
T1
λ
λS

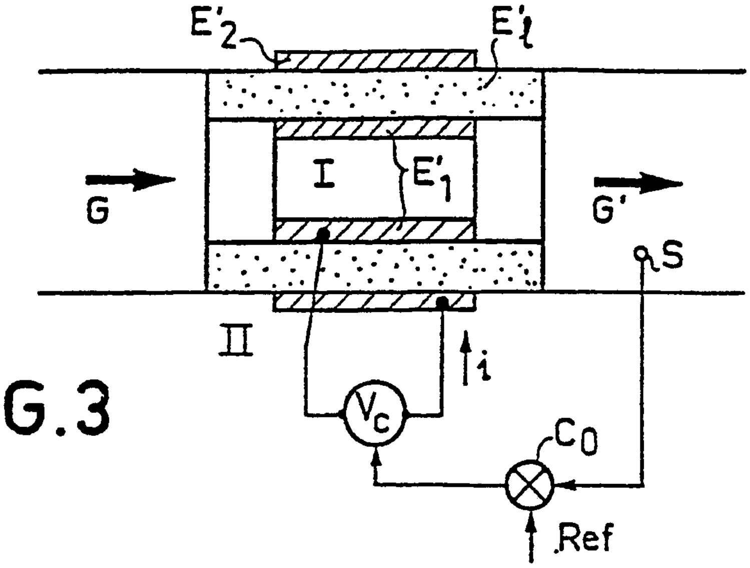


FIG.3

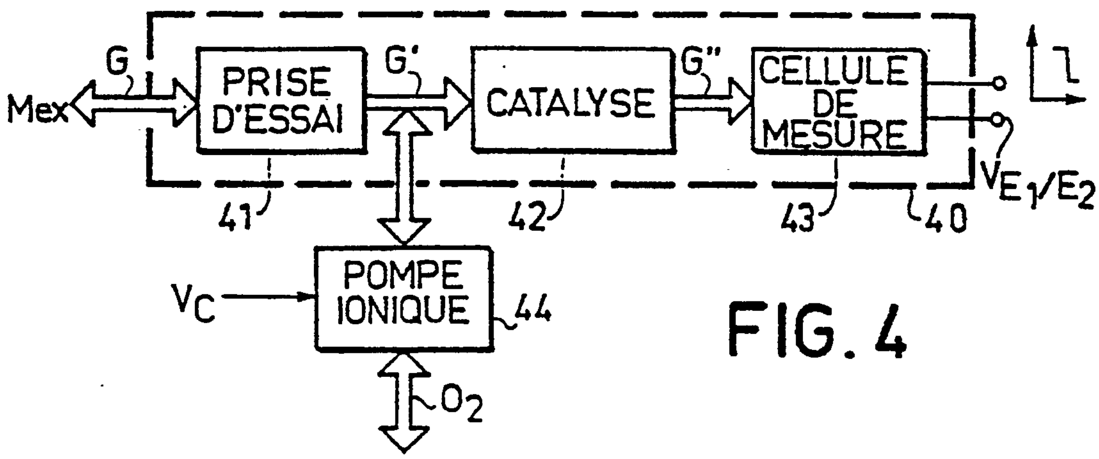


FIG. 4

FIG.5

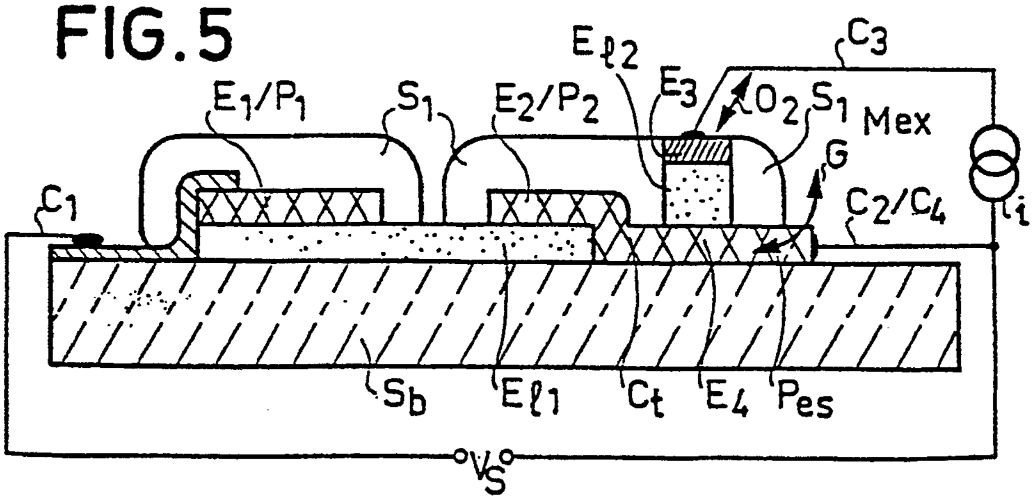

FIG. 6

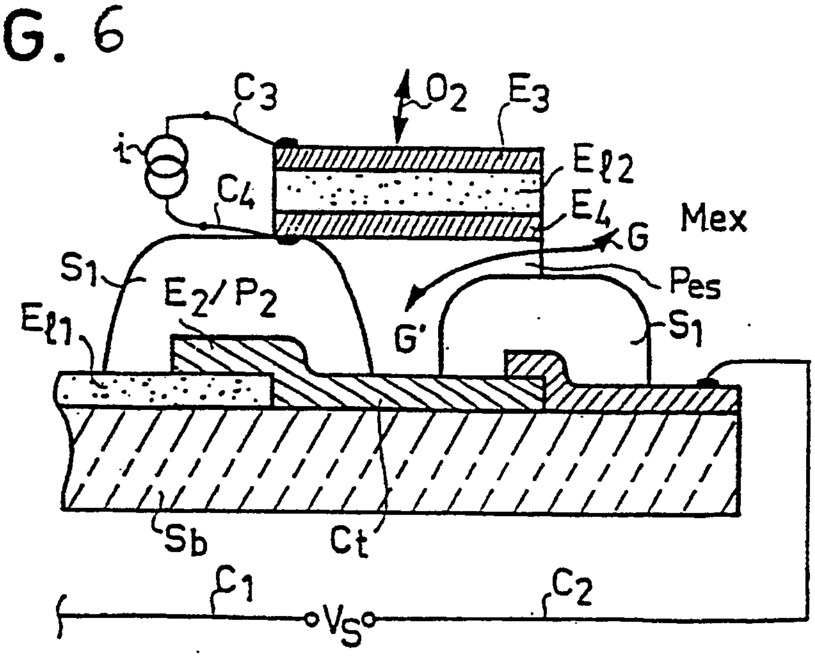

FIG. 7

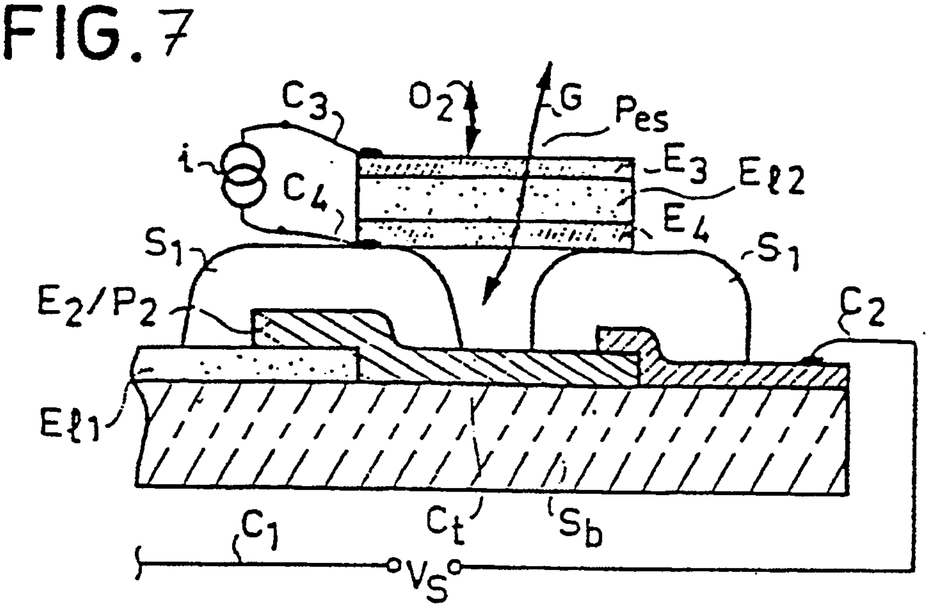


FIG. 8

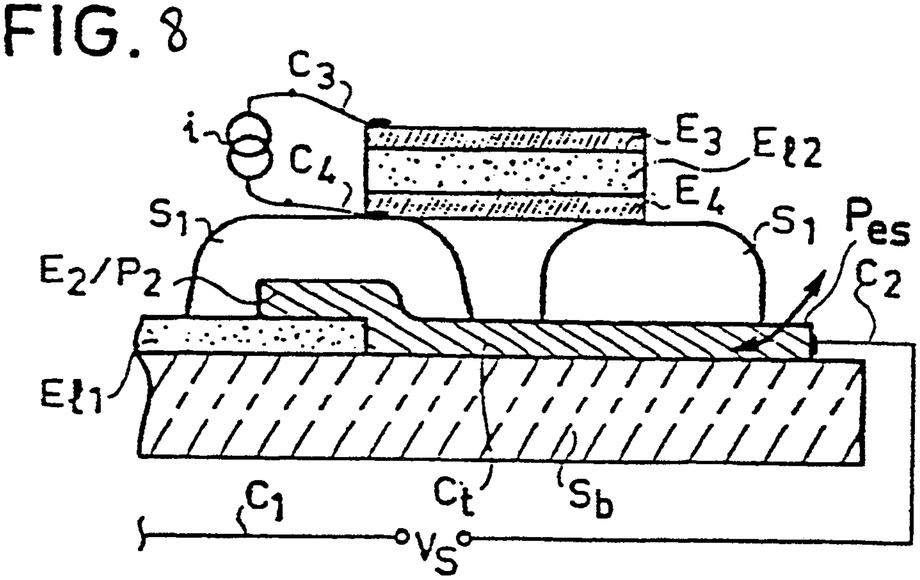


FIG. 9

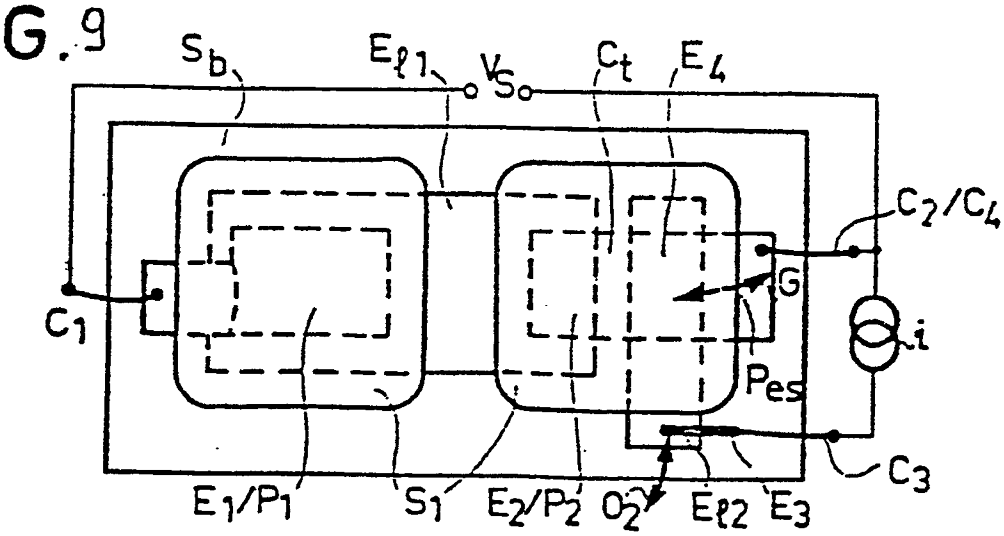

FIG. 10

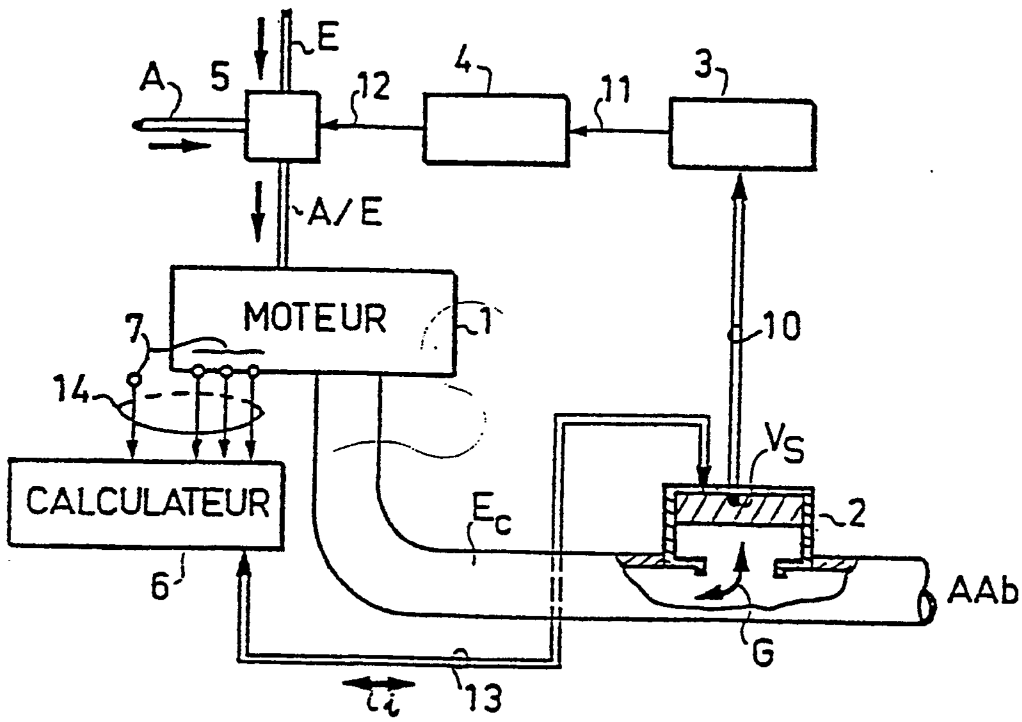
E
A
5
12
4
11
3
A/E
MOTEUR
1
7
10
14
VS
CALCULATEUR
Ec
2
6
AAb
G
13
ii

FIG. 11

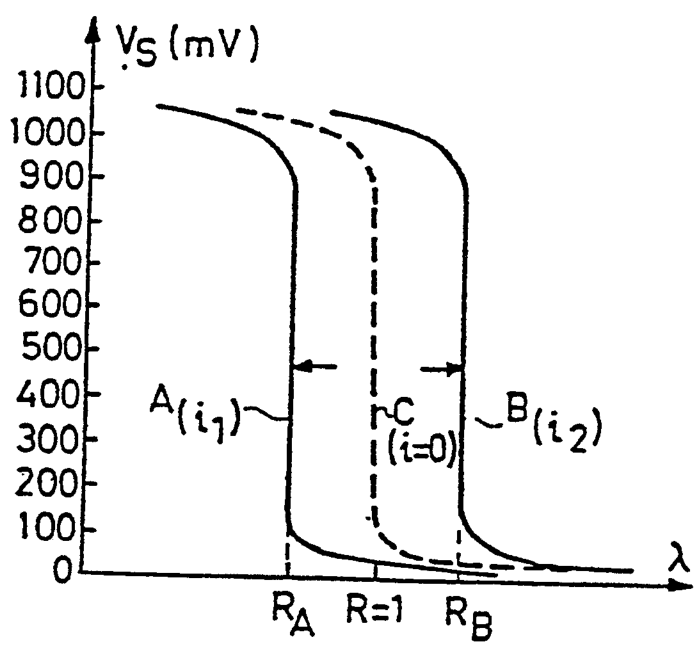
VS (mV)
1100
1000
900
800
700
600
500
400
300
200
100
0
A(i1)
C
(i=0)
B(i2)
λ
RA
R=1
RB

FIG. 12

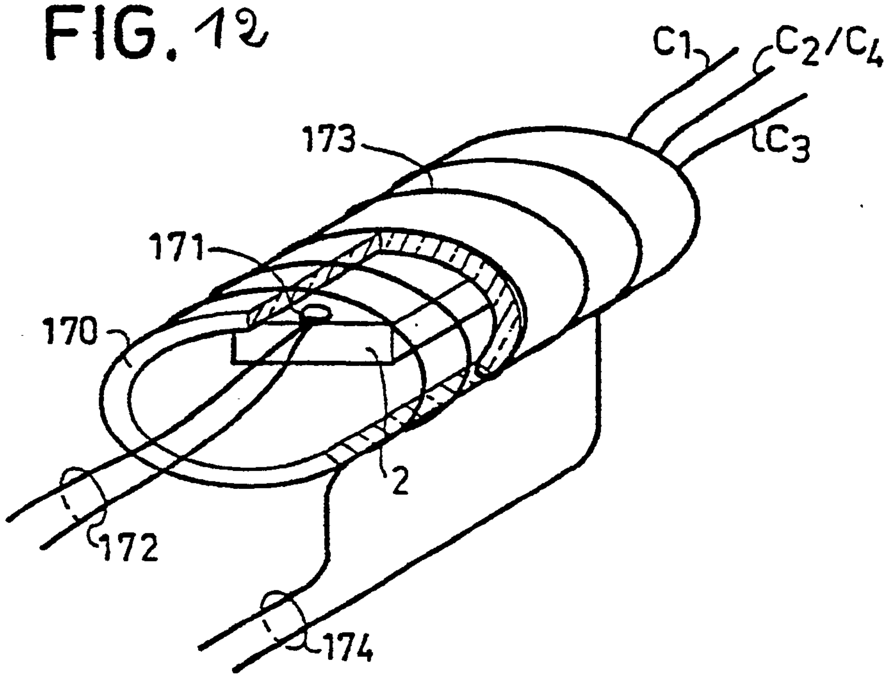
C1
C2/C4
C3
173
171
170
2
172
174

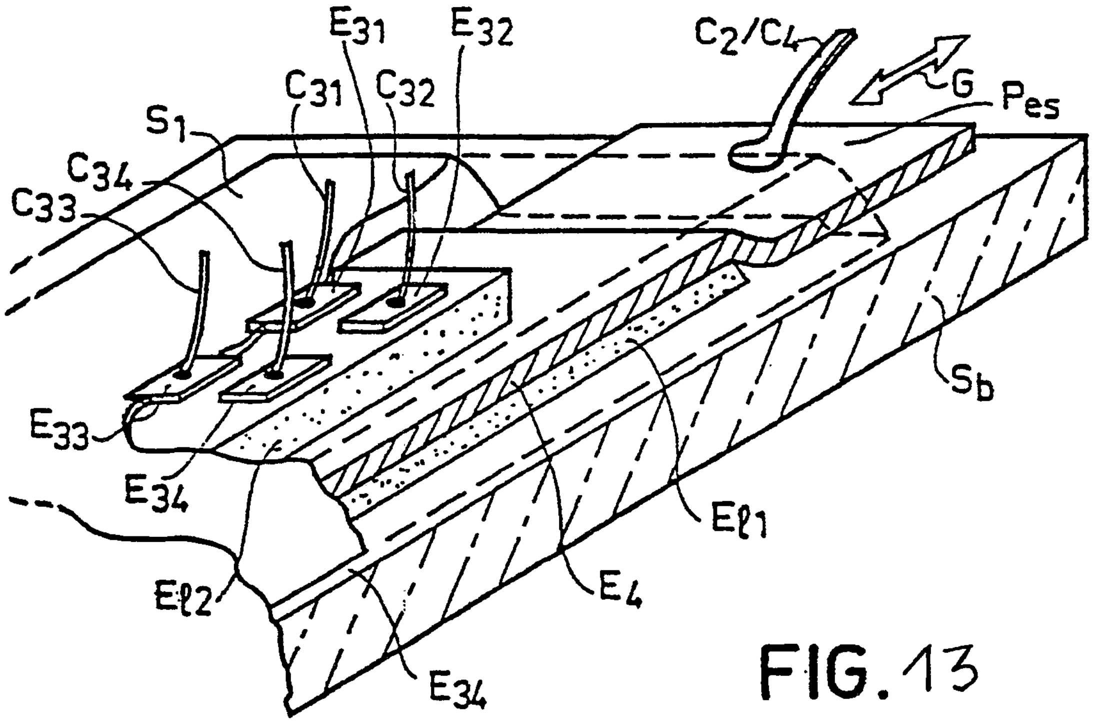
E31
E32
C2/C4
C31
C32
G
Pes
S1
C34
C33
Sb
E33
E34
El1
El2
E4
E34

FIG. 13

FIG. 16

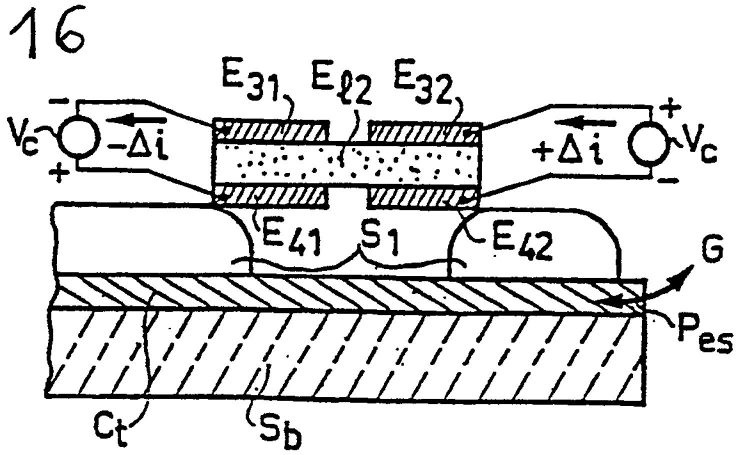


FIG. 14

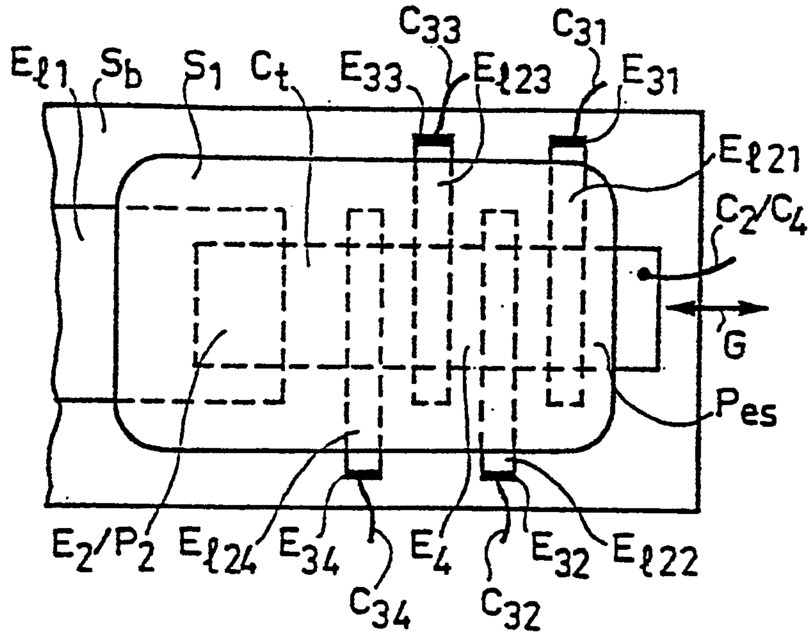


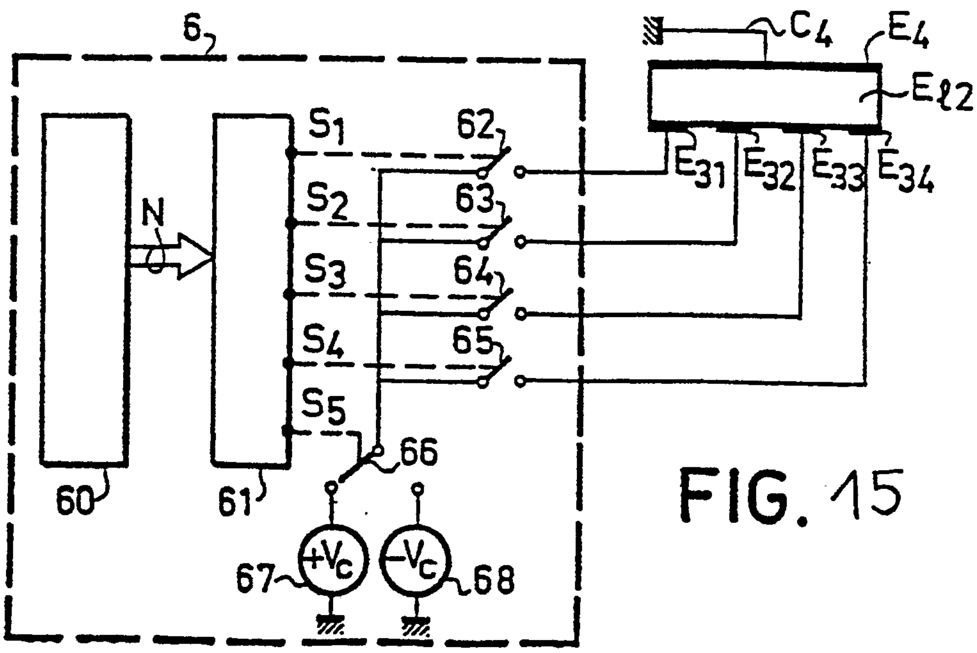


FIG. 15